# EUROPEAN PATENT APPLICATION

(11) **EP 4 510 551 A2**
(43) Date of publication of application: **19.02.2025**
(21) Application number: 24712724.4
(22) Date of filing: 22.03.2024
(51) Int. Cl.: H04M 1/72454, H04M 1/02, H04B 1/40

(54) **ELECTRONIC DEVICE AND METHOD FOR CORRECTING ATMOSPHERIC PRESSURE, AND NON-TRANSITORY COMPUTER-READABLE STORAGE MEDIUM**

(30) Priority: 28.06.2023 KR 20230083803; 24.07.2023 KR 20230096222
(71) Applicant: Samsung Electronics Co., Ltd., Suwon-si, Gyeonggi-do 16677 (KR)
(72) Inventor: BYUN, Wanju, Suwon-si, Gyeonggi-do 16677 (KR); KANG, Hyunggwang, Suwon-si, Gyeonggi-do 16677 (KR); KIM, Bongsoo, Suwon-si, Gyeonggi-do 16677 (KR); KIM, Youngho, Suwon-si, Gyeonggi-do 16677 (KR); YUN, Inkuk, Suwon-si, Gyeonggi-do 16677 (KR); JANG, Seokmin, Suwon-si, Gyeonggi-do 16677 (KR)
(74) Representative: Gulde & Partner
(86) International application number: PCT/KR2024/003643
(87) International publication number: WO 2025/005395

(57) **Abstract**

An electronic device is provided. The electronic device includes a housing including a first housing part and a second housing part movably arranged with respect to the first housing part. The electronic device includes a flexible display disposed on the housing. The electronic device includes one or more barometric pressure sensors. The electronic device includes one or more processors. The electronic device identifies information regarding relative movement of the second housing part with respect to the first housing part. The electronic device determines a barometric pressure value based on data obtained from the one or more barometric pressure sensors and the identified information regarding the relative movement.

## Description

### [Technical Field]

The following descriptions relate to an electronic device, method, and non-transitory computer readable storage medium adjusting barometric pressure.

### [Background Art]

An electronic device may provide multiple functions. For example, the electronic device may provide a user with an operating state of the electronic device or an external environmental state. The external environmental state capable of being provided to the user may be obtained via various sensors. For example, barometric pressure information may be obtained via a diaphragm pressure sensor.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

An electronic device is provided. According to an embodiment, the electronic device may comprise a housing comprising a first housing part and a second housing part movably arranged with respect to the first housing part. According to an embodiment, the electronic device may comprise a flexible display disposed on the housing. According to an embodiment, the electronic device may comprise one or more barometric pressure sensors. According to an embodiment, the electronic device may comprise one or more processors. According to an embodiment, the electronic device may comprise a memory storing instructions. According to an embodiment, the instructions, when executed by the one or more processors, may be configured to cause the electronic device to identify information regarding relative movement of the second housing part with respect to the first housing part. According to an embodiment, the instructions, when executed by the one or more processors, may be configured to cause the electronic device to determine a barometric pressure value based on data obtained from the one or more barometric pressure sensors and the identified information regarding the relative movement.

A method is provided. According to an embodiment, the method may be performed in an electronic device comprising a housing comprising a first housing part and a second housing part movably arranged with respect to the first housing part, a flexible display disposed on the housing, and one or more barometric pressure sensors. According to an embodiment, the method may comprise an operation of identifying information regarding relative movement of the second housing part with respect to the first housing part. According to an embodiment, the method may comprise an operation of determining a barometric pressure value based on data obtained from the one or more barometric pressure sensors and the identified information regarding the relative movement.

A non-transitory computer readable storage medium is provided. According to an embodiment, the non-transitory computer readable storage medium may store one or more programs. According to an embodiment, the one or more programs may include instructions that, when executed by one or more processors of an electronic device comprising a housing comprising a first housing part and a second housing part movably arranged with respect to the first housing part, a flexible display disposed on the housing, and one or more barometric pressure sensors, cause the electronic device to identify information regarding relative movement of the second housing part with respect to the first housing part. According to an embodiment, the one or more programs may include instructions that, when executed by the one or more processors of the electronic device, cause the electronic device to determine a barometric pressure value based on data obtained from the one or more barometric pressure sensors and the identified information regarding the relative movement.

An electronic device is provided. According to an embodiment, the electronic device may comprise a housing comprising a first housing part and a second housing part movably arranged with respect to the first housing part. According to an embodiment, the electronic device may comprise a flexible display disposed on the housing. According to an embodiment, the electronic device may comprise one or more barometric pressure sensors. According to an embodiment, the electronic device may comprise one or more processors. According to an embodiment, the electronic device may comprise a memory storing instructions. According to an embodiment, the instructions, when executed by the one or more processors, may be configured to cause the electronic device to determine a barometric pressure value based on data obtained from the at least one barometric pressure sensor. According to an embodiment, the instructions, when executed by the one or more processors, may be configured to cause the electronic device to ignore changes in the determined barometric pressure value, while the second housing part is moving relative to the first housing part.

A method is provided. According to an embodiment, a method may be performed in an electronic device comprising a housing comprising a first housing part and a second housing part movably arranged with respect to the first housing part, a flexible display disposed on the housing, and one or more barometric pressure sensors. According to an embodiment, the method may comprise an operation of determining a barometric pressure value based on data obtained from the at least one barometric pressure sensor. According to an embodiment, the method may comprise an operation of ignoring changes in the determined barometric pressure value, while the second housing part is moving relative to the first housing part.

A non-transitory computer readable storage medium is provided. According to an embodiment, the non-transitory computer readable storage medium may store one or more programs. According to an embodiment, the one or more programs may include instructions that, when executed by one or more processors of an electronic device comprising a housing comprising a first housing part and a second housing part movably arranged with respect to the first housing part, a flexible display disposed on the housing, and one or more barometric pressure sensors, cause the electronic device to determine a barometric pressure value based on data obtained from the at least one barometric pressure sensor. According to an embodiment, the one or more programs may include instructions that, when executed by the one or more processors of the electronic device, cause the electronic device to ignore changes in the determined barometric pressure value, while the second housing part is moving relative to the first housing part.

An electronic device is provided. According to an embodiment, the electronic device may comprise a housing comprising a first housing part and a second housing part movably arranged with respect to the first housing part. According to an embodiment, the electronic device may comprise a flexible display disposed on the housing. According to an embodiment, the electronic device may comprise one or more barometric pressure sensors. According to an embodiment, the electronic device may comprise one or more processors. According to an embodiment, the electronic device may comprise a memory storing instructions. According to an embodiment, the instructions, when executed by the one or more processors, may be configured to cause the electronic device to determine a barometric pressure value based on data obtained from the at least one barometric pressure sensor. According to an embodiment, the instructions, when executed by the one or more processors, may be configured to cause the electronic device to stop an operation of the at least one barometric pressure sensor, while the second housing part is moving relative to the first housing part.

A method is provided. According to an embodiment, a method may be performed in an electronic device comprising a housing comprising a first housing part and a second housing part movably arranged with respect to the first housing part, a flexible display disposed on the housing, and one or more barometric pressure sensors. According to an embodiment, the method may comprise an operation of determining a barometric pressure value based on data obtained from the at least one barometric pressure sensor. According to an embodiment, the method may comprise an operation of stopping an operation of the at least one barometric pressure sensor, while the second housing part is moving relative to the first housing part.

A non-transitory computer readable storage medium is provided. According to an embodiment, the non-transitory computer readable storage medium may store one or more programs. According to an embodiment, the one or more programs may include instructions that, when executed by one or more processors of an electronic device comprising a housing comprising a first housing part and a second housing part movably arranged with respect to the first housing part, a flexible display disposed on the housing, and one or more barometric pressure sensors, cause the electronic device to determine a barometric pressure value based on data obtained from the at least one barometric pressure sensor. According to an embodiment, the one or more programs may include instructions that, when executed by the one or more processors of the electronic device, cause the electronic device to stop an operation of the at least one barometric pressure sensor, while the second housing part is moving relative to the first housing part.

### [Description of the Drawings]

FIG. 1 is a block diagram of an electronic device in a network environment according to various embodiments.
FIG. 2A is a top plan view of an exemplary electronic device in a first state.
FIG. 2B is a bottom view of an exemplary electronic device in a first state.
FIG. 2C is a top plan view of an exemplary electronic device in a second state.
FIG. 2D is a bottom view of an exemplary electronic device in a second state.
FIG. 3A is an exploded perspective view of an exemplary electronic device.
FIG. 3B is an exploded perspective view of an exemplary electronic device.
FIG. 3C is a perspective view of a second housing part of an exemplary electronic device.
FIG. 3D is a perspective view of a first housing part of an exemplary electronic device.
FIG. 3E is a perspective view of an exemplary electronic device.
FIG. 4A is a cross-sectional view of an exemplary electronic device in a first state.
FIG. 4B is a cross-sectional view of an exemplary electronic device in a second state.
FIG. 5 is a schematic block diagram of an electronic device.
FIG. 6A is a graph illustrating barometric pressure according to a relative movement from a second state to a first state.
FIG. 6B is a graph illustrating barometric pressure according to a relative movement from a first state to a second state.
FIG. 7A is a graph illustrating an offset according to a relative movement from a second state to a first state.
FIG. 7B is a graph illustrating an offset according to a relative movement from a first state to a second state.
FIG. 8A is a graph illustrating barometric pressure according to a relative movement from a second state to a first state.
FIG. 8B is a graph illustrating an offset according to a relative movement from a second state to a first state.
FIG. 9A illustrates an example of a screen in which an electronic device provides information based on barometric pressure according to a relative movement during a first state.
FIG. 9B illustrates an example of a screen in which an electronic device provides information based on barometric pressure according to a relative movement during a second state.
FIG. 9C illustrates an example of a screen for updating an offset.
FIG. 9D illustrates an example of a screen containing a guide during barometric pressure measurement for updating an offset.
FIG. 9E illustrates an example of a screen representing completion of offset update.
FIG. 10 is a flowchart illustrating a method performed in an electronic device.
FIG. 11 is a flowchart illustrating a method performed in an electronic device.
FIG. 12 is a flowchart illustrating a method performed in an electronic device.
FIG. 13 is a flowchart illustrating a method performed in an electronic device.
FIG. 14 is a flowchart illustrating a method performed in an electronic device.
FIG. 15 is a flowchart illustrating a method performed in an electronic device.
FIG. 16A is a perspective view illustrating an example of a fully unfolding status of an electronic device.
FIG. 16B is a perspective view illustrating an example of an intermediate status in which an electronic device is partially unfolded.
FIG. 16C is a perspective view illustrating an example of a fully folded status of an electronic device.

### [Mode for Invention]

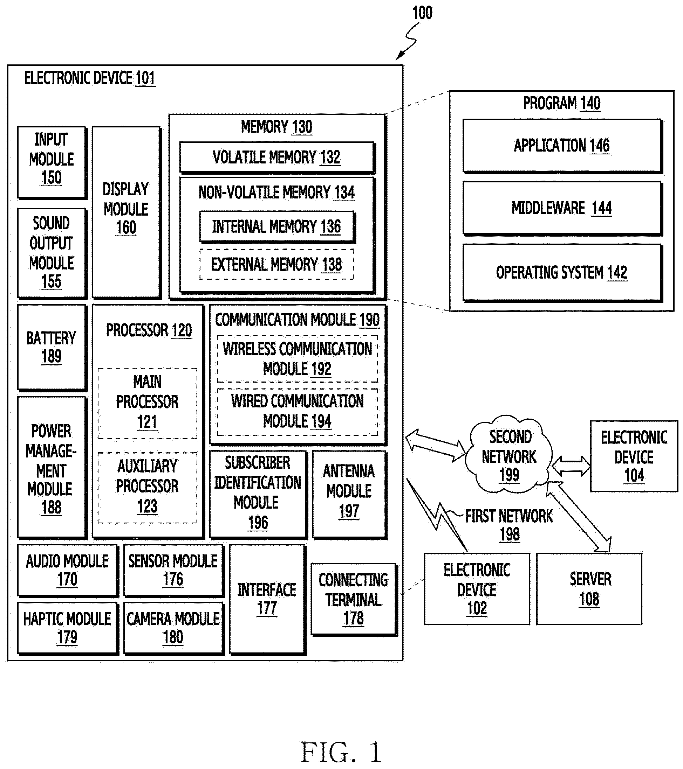

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semisupervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

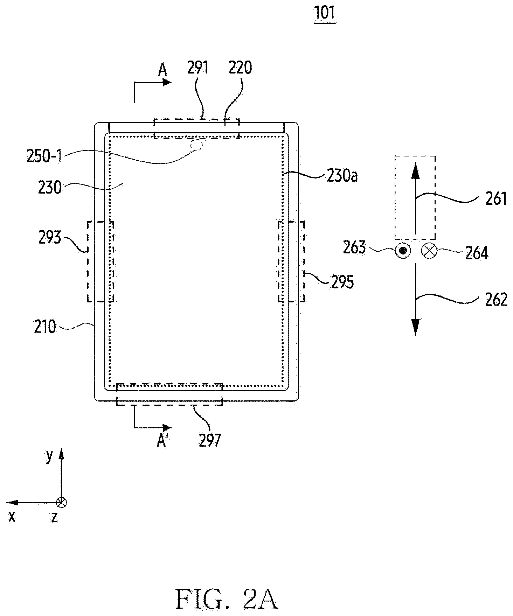

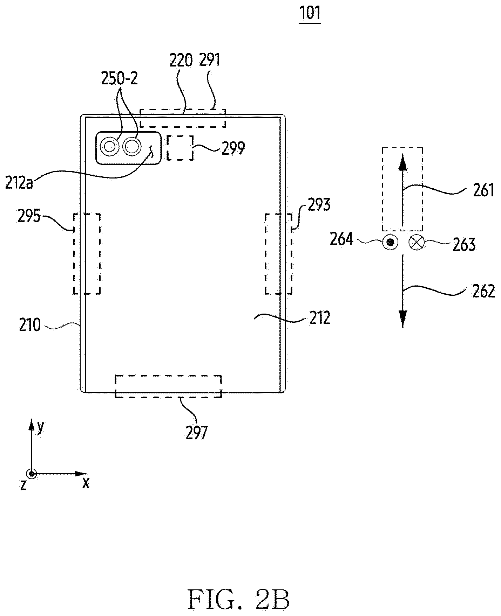

For example, a display of the display module 160 may be flexible. For example, the display may include a display area exposed outside a housing of the electronic device 101, which provides at least a portion of an outer surface of the electronic device 101. For example, because the display has flexibility, at least a portion of the display may be movable, e.g. rollable into or slidable into the housing. For example, the size of the display area may vary depending on the size of the at least a portion of the display moved, e.g. rolled into or slid into the housing. For example, the electronic device 101 including the display may be in a plurality of states including a first state providing the display area with a first size and a second state providing the display area with a second size different from the first size. For example, the first state can be illustrated through the description of FIGS. 2A and 2B.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

FIG. 2A is a top plan view of an exemplary electronic device 101 in a first state.

Referring to FIG. 2A, according to an embodiment, the electronic device 101 may include a first housing part 210, a second housing part 220 movable with respect to the first housing part 210 in a first direction 261, for example parallel to the y-axis or in a second direction 262, for example parallel to the y-axis and opposite to the first direction 261, and a display 230 (e.g., the display module 160 of FIG. 1).

For example, the electronic device 101 may be in the first state. For example, in the first state, the second housing part 220 may be movable with respect to the first housing part 210 in the first direction 261 among the first direction 261 and the second direction 262. For example, in the first state, the second housing part 220 may not be movable with respect to the first housing part 210 in the second direction 262.

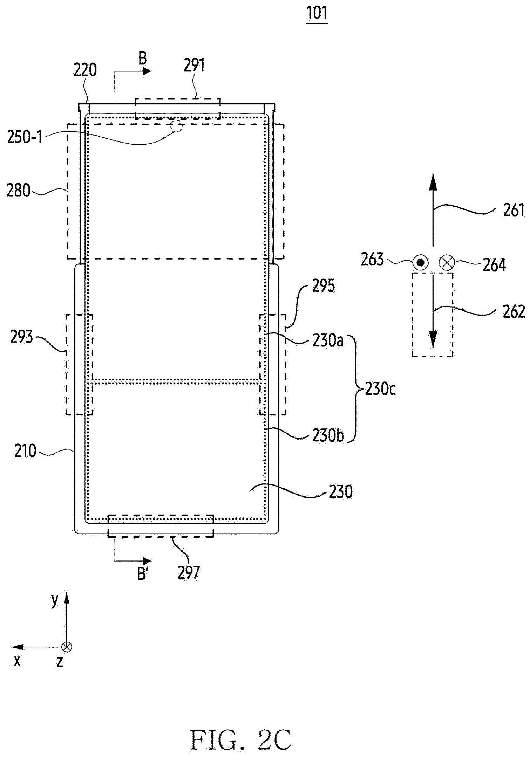

For example, in the first state, the display 230 may provide a display area, which is smaller than a display area in another state (e.g., the second state). For example, in the first state, the display area may correspond to an area 230a. For example, although not illustrated in FIG. 2A, in the first state, an area (e.g., an area 230b of FIG. 2C) of the display 230 different from the area 230a, which is the display area, may be included in the first housing part 210. For example, in the first state, the area (e.g., the area 230b of FIG. 2C) may be covered by the first housing part 210. For example, in the first state, the area may be moved, for example rolled into the first housing part 210. For example, in the first state, the area 230a may include a planar portion, unlike the area including a curved portion. However, it is not limited thereto. For example, in the first state, the area 230a may include a curved portion being extended from the planar portion and located within an edge portion.

For example, the first state may be referred to as a slide-in state or a closed state in that at least a part of the second housing part 220 is located within the first housing part 210. For example, the first state may be referred to as a reduced state in terms of providing the display area with the smallest size. However, it is not limited thereto.

For example, the first housing part 210 may include a first image sensor 250-1 in a camera module (180 of FIG. 1), exposed through a portion of the area 230a and facing in a third direction 263 parallel to the z-axis. For example, although not illustrated in FIG. 2A, the second housing part 220 may include one or more second image sensors in the camera module 180, which are exposed through a portion of the second housing part 220 and face in a fourth direction 264 parallel to the z-axis and opposite to the third direction 263. For example, the one or more second image sensors may be illustrated through the description of FIG. 2B.

According to an embodiment, the first housing part 210 or the second housing part 220 may include at least one vent hole in at least one area 291, 293, 295, and 297. The at least one vent hole (in the following referred as "the vent hole") may be formed to communicate a closed space formed by a waterproof member disposed on the front and rear surfaces of the first housing part 210 and/or the second housing part 220 with the outside. According to an embodiment, the vent hole may be configured to allow gas to pass via and may be configured to prevent inflow of liquid. The at least one area 291, 293, 295, and 297 where the vent hole is formed may be an area exposed to the outside in the first state and the second state. However, it is not limited thereto.

FIG. 2B is a bottom view of an exemplary electronic device in a first state.

Referring to FIG. 2B, in the first state, one or more second image sensors 250-2 disposed in the second housing part 220 may be located within a structure disposed in the first housing part 210 for the one or more second image sensors 250-2. For example, in the first state, light from the outside of the electronic device 101 may be received to the one or more second image sensors 250-2 through the structure. For example, since the one or more second image sensors 250-2 are located within the structure in the first state, the one or more second image sensors 250-2 may be exposed through the structure in the first state. For example, the structure may be implemented in various ways. For example, the structure may be an opening or a notch. For example, the structure may be an opening 212a in a plate 212 of the first housing part 210 surrounding at least a portion of the second housing part 220. However, it is not limited thereto. For example, in the first state, the one or more second image sensors 250-2 included in the second housing part 220 may be covered by at least a portion of the plate 212 of the first housing part 210.

According to embodiments, the first state may be changed to the second state.

For example, the first state (or the second state) may be changed to the second state (or the first state) through one or more intermediate states between the first state and the second state.

For example, the first state (or the second state) may be changed to the second state (or the first state) based on a predefined user input. For example, the first state (or the second state) may be changed to the second state (or the first state) in response to a user input with respect to a physical button exposed through a portion of the first housing part 210 or a portion of the second housing part 220. For example, the first state (or the second state) may be changed to the second state (or the first state) in response to a touch input with respect to an executable object displayed in the display area. For example, the first state (or the second state) may be changed to the second state (or the first state) in response to a touch input having a contact point on the display area and a pressing strength greater than or equal to a reference strength. For example, the first state (or the second state) may be changed to the second state (or the first state) in response to a voice input received through a microphone of the electronic device 101. For example, the first state (or the second state) may be changed to the second state (or the first state) in response to an external force applied to the first housing part 210 and/or the second housing part 220 to move the second housing part 220 relative to the first housing part 210. For example, the first state (or the second state) may be changed to the second state (or the first state) in response to a user input identified by an external electronic device (e.g., earbuds or smartwatch) connected to the electronic device 101. However, it is not limited thereto.

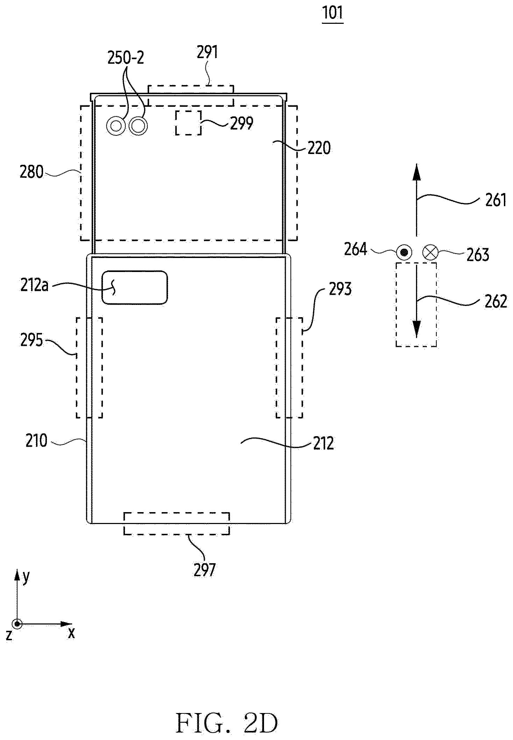

The second state may be illustrated through the descriptions of FIGS. 2C and 2D.

According to an embodiment, the first housing part 210 or the second housing part 220 may include at least one vent hole in at least one area 291, 293, 295, 297, and 299. The at least one area 291, 293, 295, 297, and 299 where the vent hole is formed may be an area exposed to the outside in the first state and the second state. However, it is not limited thereto.

FIG. 2C is a top plan view of an exemplary electronic device in a second state.

Referring to FIG. 2C, the electronic device 101 may be in the second state. For example, in the second state, the second housing part 220 may be movable with respect to the first housing part 210, e.g. in the second direction 262 among the first direction 261 and the second direction 262. For example, in the second state, the volume of the electronic device 101 may be reduced as the second housing part 220 is moved in the second direction 262 among the first direction 261 and the second direction 262. For example, in the second state, the second housing part 220 may not be moved with respect to the first housing part 210 in the first direction 261.

According to an embodiment, in the second state, the display 230 may provide the display area with the largest size. For example, in the second state, the display area may correspond to an area 230c including an area 230a and an area 230b. For example, the area 230b included in the first housing part 210 in the first state may be exposed in the second state. According to an embodiment, as the second housing part 220 is moved in the first direction 261 in the first state, at least a partial area (e.g., the area 230b) of the display 230 may be exposed to the outside for the user to view. For example, in the second state, the area 230a may include a planar portion. However, it is not limited thereto. For example, the area 230a may include a curved portion extended from the planar portion and located in an edge portion. According to an embodiment, unlike the area 230a in the first state, the area 230b may include the planar portion among the planar portion and the curved portion. However, it is not limited thereto. For example, the area 230b may include a curved portion extended from the planar portion of the area 230b and located in the edge portion.

According to an embodiment, the second state may be referred to as a slide-out state or an open state in that at least a portion of the second housing part 220 is located outside the first housing part 210. For example, the second state may be referred to as an extended state in terms of providing the display area with the largest size. However, it is not limited thereto.

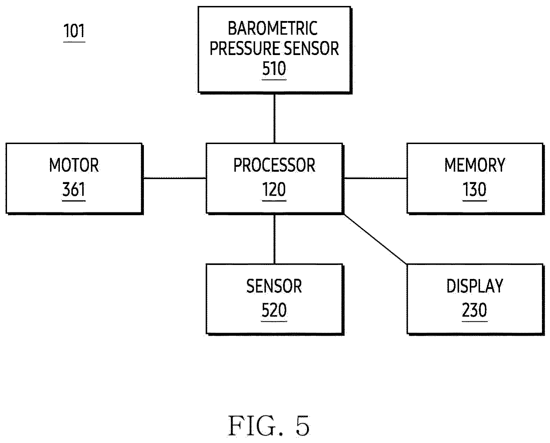

In an embodiment, when a state of the electronic device 101 is changed from the first state to the second state, the first image sensor 250-1 facing in a third direction 263 (e.g., a rear direction of the electronic device 101) may be moved together with the area 230a according to the movement of the second housing part 220 in the first direction 261. For example, although not illustrated in FIG. 2C, when a state of the electronic device 101 is changed from the first state to the second state, one or more second image sensors 250-2 facing in a fourth direction 264 (e.g., a front direction of the electronic device 101) may be moved according to the movement of the second housing part 220 in the first direction 261. For example, a relative positional relationship between one or more second image sensors 250-2 and the structure illustrated through the description of FIG. 5B may be changed according to the movement of one or more second image sensors 250-2. For example, the change in the relative positional relationship may be illustrated through FIG. 2D.

According to an embodiment, when the state of the electronic device 101 changes from the first state to the second state, an internal space formed by the first housing part 210 and the second housing part 220 may change. According to an embodiment, a volume may change according to a relative distance between the second housing part 220 and the first housing 210. For example, as the second housing part 220 moves in the first direction 261, the volume of the electronic device 101 may increase. For example, a volume 280 of the electronic device 101 may be increased to correspond to the movement of the second housing part 220. Herein, the volume 280 may mean a space or volume inside the electronic device 101 that changes according to the movement of the second housing part 220.

FIG. 2D is a bottom view of an exemplary electronic device in a second state.

Referring to FIG. 2D, in the second state, one or more second image sensors 250-2 may be located outside the structure. For example, in the second state, one or more second image sensors 250-2 may be located outside the opening 212a in the plate 212. For example, since one or more second image sensors 250-2 are located outside the opening 212a in the second state, the one or more second image sensors 250-2 may be exposed in the second state. For example, since one or more second image sensors 250-2 are located outside the structure in the second state, the relative positional relationship in the second state may be different from the relative positional relationship in the first state.

In an embodiment, when the electronic device 101 does not include the structure such as the opening 212a, the one or more second image sensors 250-2 in the second state may be exposed, unlike the one or more second image sensors 250-2 in the first state. For example, the one or more second image sensors 250-2 in the first state may not be exposed because there is no opening 212a, and may be covered by the first housing part 210 and/or covered by the plate 212.

Although not illustrated in FIGS. 2A, 2B, 2C, and 2D, the electronic device 101 may be in an intermediate state between the first state and the second state. According to an embodiment, a size of the display area in the intermediate state may be larger than a size of the display area in the first state and smaller than a size of the display area in the second state. According to an embodiment, the display area in the intermediate state may correspond to an area including a part of the area 230a and the area 230b. For example, in the intermediate state, a portion of the area 230b may be exposed, and another portion (or a remaining portion) of the area 230b may be covered by the first housing part 210 or moved, e.g. rolled into the first housing part 210. According to an embodiment, however, it is not limited thereto. According to an embodiment, as the second housing part 220 is moved in the first direction 261, a size of the display area in the intermediate state may gradually increase. According to an embodiment, as the second housing part 220 is moved in the second direction 262, a size of the display area in the intermediate state may gradually decrease.

According to an embodiment, when the state of the electronic device 101 changes from the first state to the second state, a volume 280 may increase. In case that the volume 280 is increased, air may flow into the electronic device 101 via at least one vent hole in at least one area 291, 293, 295, 297, and 299. In addition, when the state of the electronic device 101 changes from the second state to the first state, the volume 280 may decrease. In case that the volume 280 is decreased, air may flow out from the inside of the electronic device 101 via the at least one vent hole in the at least one area 291, 293, 295, 297, and 299.

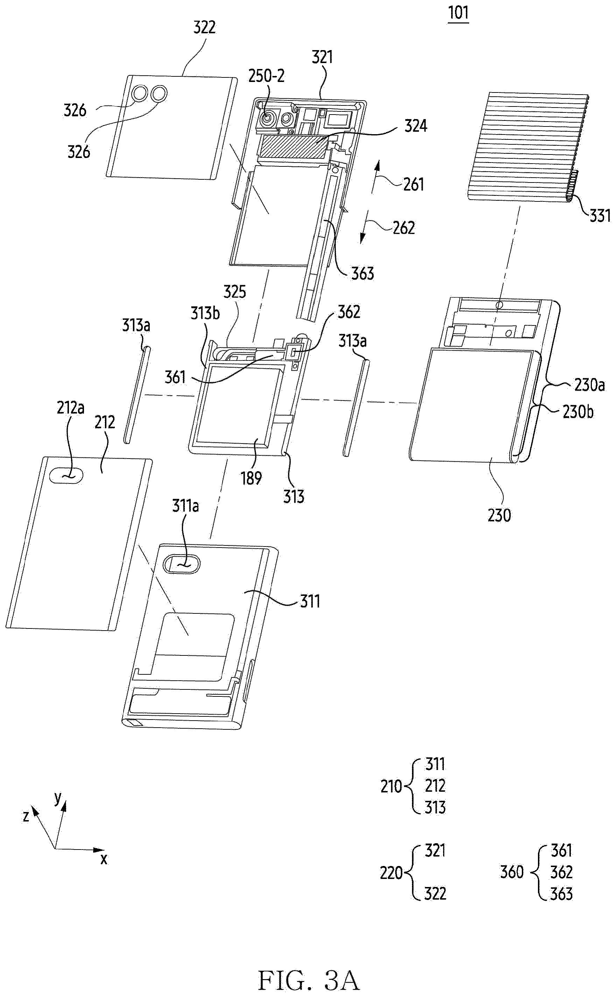

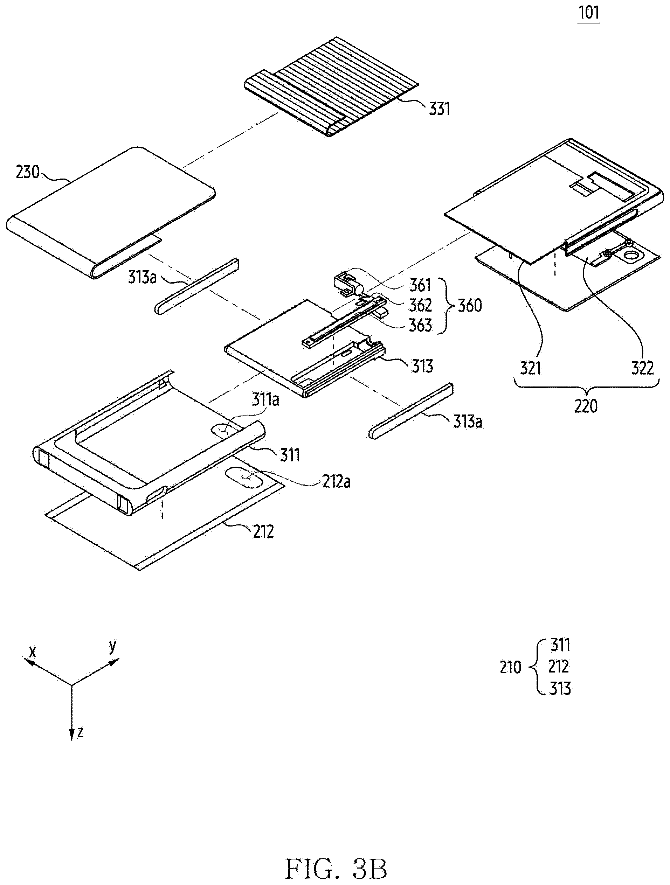

Referring back to FIG. 1, the electronic device 101 may include structures for moving the second housing (e.g., the second housing part 220 of FIG. 2) of the electronic device 101 with respect to the first housing (e.g., the first housing part 210 of FIG. 2) of the electronic device 101. For example, the structures may be illustrated through the descriptions of FIGS. 3A and 3B.

FIG. 3A is an exploded perspective view of an exemplary electronic device. FIG. 3B is an exploded perspective view of an exemplary electronic device.

Referring to FIGS. 3A and 3B, the electronic device 101 may include a first housing part 210, a second housing part 220, a display 230, and a driving unit 360.

According to an embodiment, the first housing part 210 may include a book cover 311, a plate 212, and a frame cover 313.

According to an embodiment, the book cover 311 may at least partially form a side portion of an outer surface of the electronic device 101. For example, the book cover 311 may at least partially form a rear portion of the outer surface. For example, the book cover 311 may include at least one opening 311a for one or more second image sensors 250-2. For example, the book cover 311 may include a surface supporting the plate 212. For example, the book cover 311 may be coupled to the plate 212. For example, the book cover 311 may include a frame cover 313. For example, the book cover 311 may be coupled to the frame cover 313.

According to an embodiment, the plate 212 may at least partially form a rear surface portion of the outer surface. For example, the plate 212 may include at least one opening 212a for one or more second image sensors 250-2. For example, the plate 212 may be disposed on the surface of the book cover 311. For example, the opening 212a may be aligned with the opening 311a.

According to an embodiment, the frame cover 313 may be at least partially surrounded by the book cover 311.

According to an embodiment, the frame cover 313 may be at least partially surrounded by the display 230. For example, the frame cover 313 may be at least partially surrounded by the display 230, but a position of the frame cover 313 may be maintained independently of the movement of the display 230. For example, the frame cover 313 may be arranged in relation to at least a portion of components of the display 230. For example, the frame cover 313 may include rails 313a providing (or guiding) a path of movement of at least one component of the display 230.

According to an embodiment, the frame cover 313 may be coupled with at least one component of the electronic device 101. For example, the frame cover 313 may support a rechargeable battery 189. For example, the battery 189 may be supported through a recess or a hole in a surface 313b of the frame cover 313. For example, the frame cover 313 may be coupled to an end of a flexible printed circuit board (FPCB) 325 on a surface of the frame cover 313. According to an embodiment, although not explicitly shown in FIGS. 3A and 3B, another end of the FPCB 325 may be connected to the PCB 324 through at least one connector. For example, the PCB 324 may be electrically connected to another PCB (not shown in FIGS. 3A and 3B) that supplies power to a motor 361, through the FPCB 325.

According to an embodiment, the frame cover 313 may be coupled with at least one structure of the electronic device 101 for a plurality of states including the first state and the second state. For example, the frame cover 313 may fix the motor 361 of the driving unit 360.

According to an embodiment, the second housing part 220 may include a front cover 321 and a slide cover 322.

According to an embodiment, the front cover 321 may be at least partially surrounded by the display 230. For example, unlike the frame cover 313, the front cover 321 may be coupled with at least a portion of the area 230a of the display 230 surrounding the front cover 321 so that the display 230 is moved along the second housing part 220 moved with respect to the first housing part 210.

According to an embodiment, the front cover 321 may be coupled with at least one component of the electronic device 101. For example, the front cover 321 may be coupled with a printed circuit board (PCB) 324 including components of the electronic device 101. For example, the PCB 324 may include a processor 120 (not shown in FIGS. 3A and 3B). For example, the front cover 321 may include one or more second image sensors 250-2.

According to an embodiment, the front cover 321 may be coupled with at least one structure of the electronic device 101 for a plurality of states including the first state and the second state. For example, the front cover 321 may fix a rack gear 363 of the driving unit 360.

According to this configuration, the front cover 321 may be coupled to the slide cover 322.

According to an embodiment, the slide cover 322 may be coupled with the front cover 321 to protect at least one component of the electronic device 101 coupled within the front cover 321 and/or at least one structure of the electronic device 101 coupled within the front cover 321. For example, the slide cover 322 may include a structure for the at least one component. For example, the slide cover 322 may include one or more openings 326 for one or more second image sensors 250-2. For example, one or more openings 326 may be aligned with one or more second image sensors 250-2 disposed on the front cover 321. For example, a size of each of the one or more openings 326 may correspond to a size of each of the one or more second image sensors 250-2.

According to an embodiment, the display 230 may include a support member 331. For example, the support member 331 may include a plurality of bars. For example, the plurality of bars may be coupled to each other.

According to an embodiment, the driving unit 360 may include a motor 361, a pinion gear 362, and a rack gear 363.

According to an embodiment, the motor 361 may operate based on power from the battery 189. For example, the power may be provided to the motor 361, in response to the predefined user input.

According to an embodiment, the pinion gear 362 may be coupled to the motor 361 through a shaft. For example, the pinion gear 362 may be rotated based on the operation of the motor 361 transmitted through the shaft.

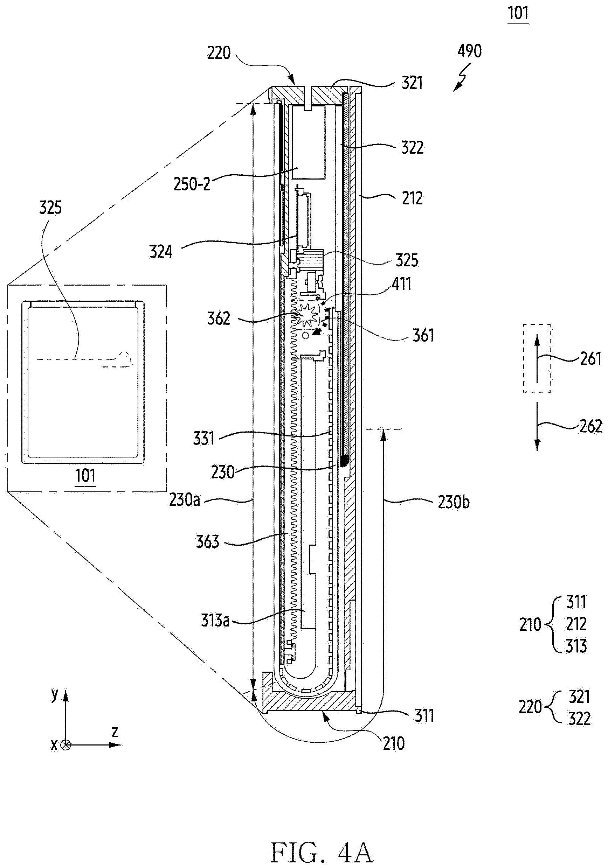

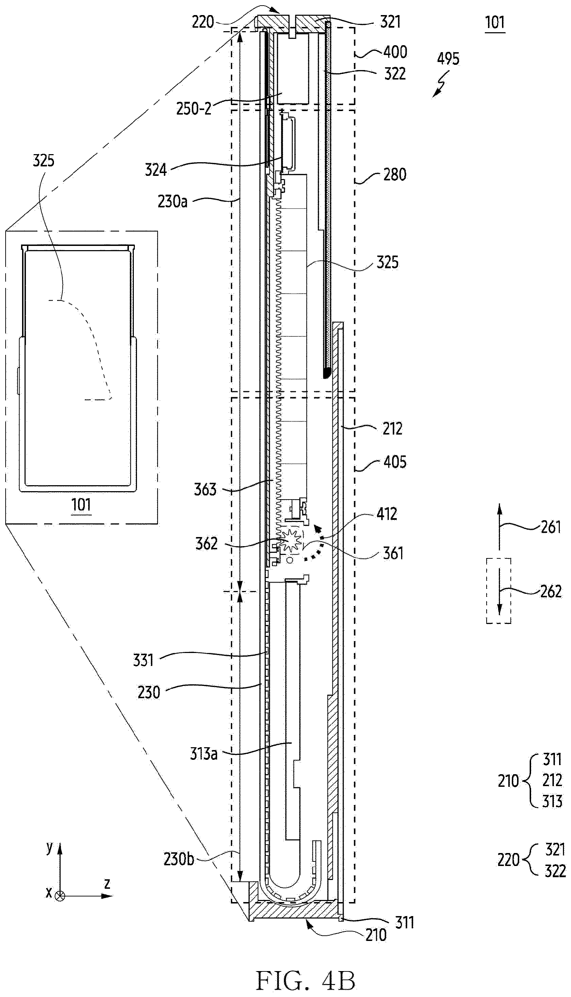

According to an embodiment, the rack gear 363 may be arranged in relation to the pinion gear 362. For example, teeth of the rack gear 363 may engage with teeth of the pinion gear 362. For example, the rack gear 363 may be moved in the first direction 261 or the second direction 262 according to the rotation of the pinion gear 362. For example, the second housing part 220 may be moved in the first direction 261 and the second direction 262 by the rack gear 363 moved according to the rotation of the pinion gear 362 due to the operation of the motor 361. For example, the first state of the electronic device 101 may be changed to a state (e.g., one or more intermediate states or the second state) different from the first state through the movement of the second housing part 220 in the first direction 261. For example, the second state of the electronic device 101 may be changed to a state (e.g., one or more intermediate states or the first state) different from the second state through the movement of the second housing part 220 in the second direction 262. For example, the first state being changed to the second state by the driving unit 360 and the second state being changed to the first state by the driving unit 360 may be illustrated through FIGS. 4A and 4B.

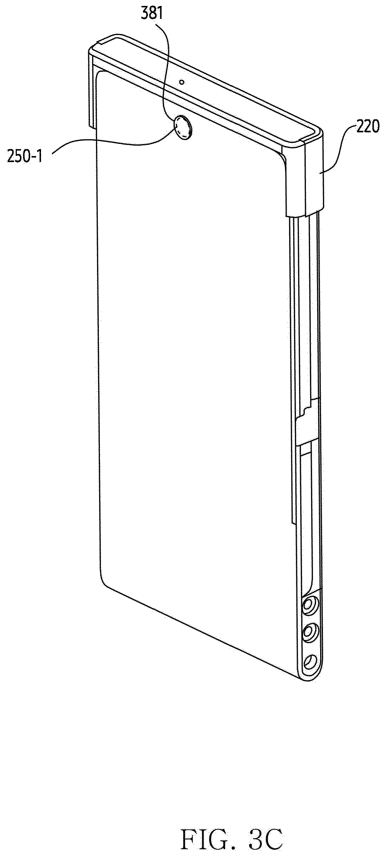

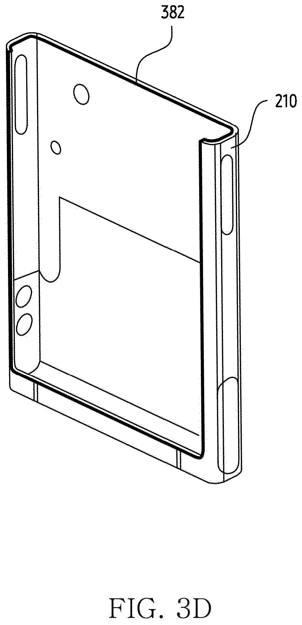

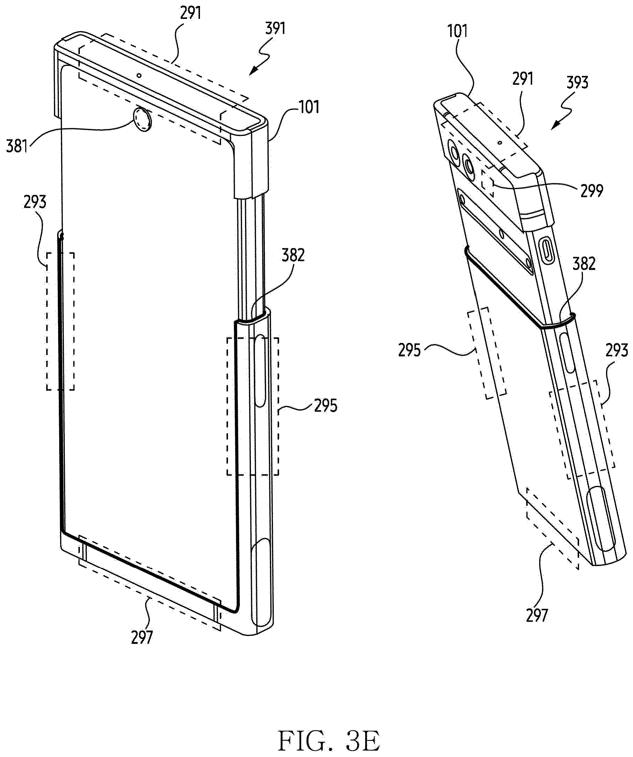

FIG. 3C is a perspective view of a second housing part 220 of an exemplary electronic device. FIG. 3D is a perspective view of a first housing part 210 of an exemplary electronic device. FIG. 3E is a perspective view of an exemplary electronic device.

Referring to FIG. 3C, a structure 381 may be prepared at an edge of the second housing part 220 to prevent an inflow of fluid. For example, the structure 381 for preventing the inflow of fluid may be prepared in an area where a first image sensor 250-1 is exposed. For example, an adhesive layer having a waterproof function may be disposed between the first image sensor 250-1 and a hole in which the first image sensor 250-1 is disposed. Alternatively, a material (e.g., rubber, flexible plastic, adhesive layer) having a waterproof function may be prepared between the first image sensor 250-1 and the hole in which the first image sensor 250-1 is disposed.

Referring to FIG. 3D, a structure 382 for preventing the inflow of fluid may be prepared at an edge of the first housing part 210. For example, the structure 382 for preventing the inflow of fluid may be prepared at an edge portion where the first housing part 210 and the second housing part 220 contact each other. For example, the adhesive layer having the waterproof function may be disposed on the structure 382. Alternatively, the material (e.g., rubber, flexible plastic, adhesive layer) having the waterproof function may be prepared on the structure 382.

Referring to drawings 391 and 393 of FIG. 3E, the inflow of fluid into an electronic device 101 may be prevented by the structures 381 and 382. When a state of the electronic device 101 changes from the first state to the second state, air may flow into the electronic device 101 via at least one vent hole in at least one area 291, 293, 295, 297, and 299. In addition, when the state of the electronic device 101 changes from the second state to the first state, air may flow out from the inside of the electronic device 101 via the vent hole in the at least one area 291, 293, 295, 297, and 299.

FIG. 4A is a cross-sectional view of an exemplary electronic device in a first state. FIG. 4B is a cross-sectional view of an exemplary electronic device in a second state.

Referring to FIGS. 4A and 4B, the motor 361 may operate based at least in part on the predefined user input received in a first state 490. For example, the pinion gear 362 may be rotated in a first rotation direction 411 based at least in part on the operation of the motor 361. For example, the rack gear 363 may be moved in the first direction 261 based at least in part on the rotation of the pinion gear 362 in the first rotation direction 411. For example, since the front cover 321 in the second housing part 220 fixes the rack gear 363, the second housing part 220 may be moved in the first direction 261 based at least in part on the movement of the rack gear 363 in the first direction 261. For example, since the front cover 321 in the second housing part 220 is coupled to at least a portion of the area 230a of the display 230 and fixes the rack gear 363, the display 230 may be moved based at least in part on the movement of the rack gear 363 in the first direction 261. For example, the display 230 may be moved along the rails 313a. For example, the shape of at least a portion of the plurality of bars of the support member 331 of the display 230 may be changed when the first state 490 is changed to a second state 495.

In an embodiment, the area 230b of the display 230 may be moved according to the movement of the display 230. For example, when the state 490 is changed to the state 495 according to the predefined user input, the area 230b may be moved through a space between the book cover 311 and the frame cover 313. For example, the area 230b in the second state 495 may be exposed, unlike the area 230b moved, e.g. rolled into the space in the first state 490.

In an example, since the front cover 321 in the second housing part 220 is coupled with the PCB 324 connected to the other end of the FPCB 325 and fixes the rack gear 363, the shape of the FPCB 325 may be changed when a state of the electronic device is changed from the first state 490 to the second state 495.

The motor 361 may operate based at least in part on the predefined user input received in the second state 495. For example, the pinion gear 362 may be rotated in the second rotation direction 412 based at least in part on the operation of the motor 361. For example, the rack gear 363 may be moved in the second direction 262 based at least in part on the rotation of the pinion gear 362 in the second rotation direction 412. For example, since the front cover 321 in the second housing part 220 fixes the rack gear 363, the second housing part 220 may be moved in the second direction 262 based at least in part on the movement of the rack gear 363 in the second direction 362. For example, since the front cover 321 in the second housing part 220 is coupled to at least a portion of the area 230a of the display 230 and fixes the rack gear 363, the display 230 may be moved based at least in part on the movement of the rack gear 363 in the second direction 362. For example, the display 230 may be moved along the rails 313a. For example, the shape of at least a portion of the plurality of bars of the support member 331 of the display 230 may be changed when the second state 495 is changed to the first state 490. For example, when the second housing part 220 is moved in the second direction 262 in the second state 495, the plurality of bars of the support member 331 may be bent as at least a portion of the display 230 is bent, or may be changed in position, shape, or gap to support bending.

According to an embodiment, the area 230b of the display 230 may be moved according to the movement of the display 230. For example, when the second state 495 is changed to the first state 490 according to the predefined user input, the area 230b may be moved through the space between the book cover 311 and the frame cover 313. For example, the area 230b in the first state 490 may be moved, e.g. rolled into the space, unlike the area 230b being exposed in the second state 495.

According to an embodiment, since the front cover 321 in the second housing part 220 is coupled to the PCB 324 connected to the other end of the FPCB 325 and fixes the rack gear 363, the shape of the FPCB 325 may be changed when the second state 495 is changed to the first state 490.

FIGS. 2A to 4B illustrate the electronic device 101 in which a height of the display area is changed and a width of the display area is maintained when the first state (or the second state) is changed to the second state (or the first state) in a portrait mode, but it is for convenience of explanation. For example, the electronic device 101 may be implemented by maintaining the height of the display area and changing the width of the display area when the first state (or the second state) is changed to the second state (or the first state) in the portrait mode.

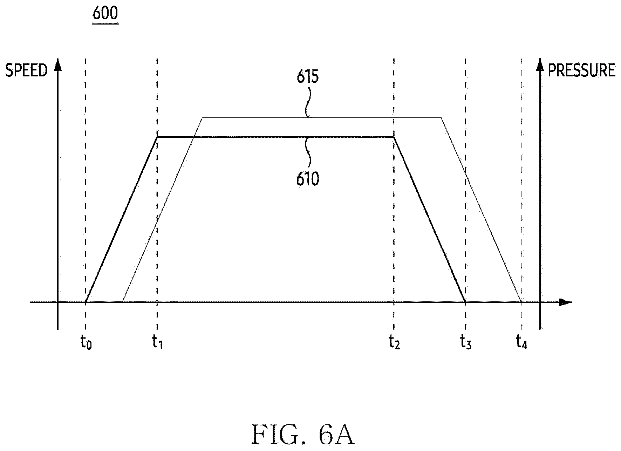

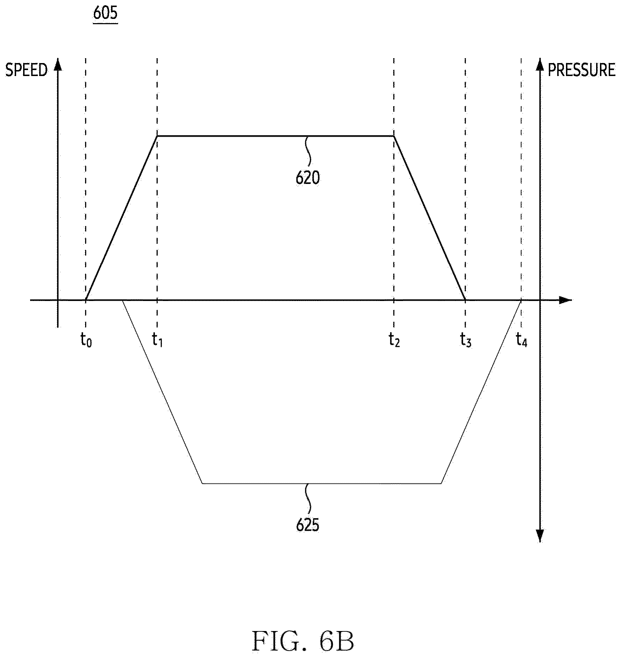

FIG. 5 is a schematic block diagram of an electronic device. FIG. 6A is a graph 600 illustrating barometric pressure according to a relative movement from a second state to a first state. FIG. 6B is a graph 605 illustrating barometric pressure according to a relative movement from the first state to the second state.

For description of FIGS. 5, 6A, and 6B, components of an electronic device 101 and a structure of the electronic device 101 described with reference to FIGS. 1, 2A, 2B, 2C, 2D, 3A, 3B, 4A, and 4B may be referred to.

Referring to FIG. 5, the electronic device 101 may include a processor 120, a memory 130, a motor 361, a barometric pressure sensor 510, and a sensor 520. For example, the barometric pressure sensor 510 and the sensor 520 may be included in a sensor module 176 described with reference to FIG. 1.

According to an embodiment, the barometric pressure sensor 510 may obtain data for identifying barometric pressure. For example, the barometric pressure sensor 510 may obtain data for identifying the barometric pressure in response to a command from the processor 120.

According to an embodiment, the barometric pressure sensor 510 may be disposed in an area where a volume (e.g., 280 of FIG. 2C) changes according to a relative movement of a second housing part (e.g., 220 of FIG. 2C). However, it is not limited thereto. According to an embodiment, the barometric pressure sensor 510 may be disposed in an area away from the area where the volume 280 changes according to the relative movement of the second housing part 220.

According to an embodiment, the sensor 520 may obtain data for identifying a physical quantity (e.g., movement speed, acceleration, movement displacement) related to the electronic device 101. For example, the sensor 520 may obtain data for identifying a relative movement between the first housing part (e.g., 210 of FIG. 2C) and the second housing part 220. For example, the sensor 520 may be a hall sensor, a photoelectric sensor, a proximity sensor, a piezoelectric sensor, or an acceleration sensor. However, it is not limited thereto.

According to an embodiment, the first housing part 210 and the second housing part 220 may be moved relative to each other. For example, the first housing part 210 and the second housing part 220 may be moved relative to each other to change between the first state (or slide-in state or closed state) and the second state (or slide-out state or opened state).

According to an embodiment, the first housing part 210 and the second housing part 220 may be changed between the first state and the second state by power of the motor 361. However, it is not limited thereto. For example, the first housing part 210 and the second housing part 220 may be changed between the first state and the second state by an external force (e.g., a force that a user pulls or a force that the user pushes).

According to an embodiment, the processor 120 may identify a relative movement of the first housing part 210 and the second housing part 220. For example, the processor 120 may identify the relative movement based on a signal related to the motor (e.g., 361 of FIG. 3A). For example, the processor 120 may identify the relative movement based on a control signal (e.g., a signal for controlling an operating speed, a signal for applying power) transmitted to the motor 361. For example, the processor 120 may identify the relative movement based on a response signal (e.g., a flag representing that it is operating) received from the motor 361. However, it is not limited thereto. For example, the processor 120 may identify the relative movement based on a signal from the sensor 520. For example, the processor 120 may identify the relative movement based on information used to identify the relative movement. For example, the processor 120 may identify the relative movement based on the information used to identify the relative movement obtained via the sensor 520. Hereinafter, the information used to identify the relative movement may also be referred to as information regarding a movement of a housing.

According to an embodiment, the processor 120 may obtain data for identifying barometric pressure by using the barometric pressure sensor 510. Herein, the data for identifying the barometric pressure may include data obtained before the relative movement, data obtained during the relative movement, or data obtained after the relative movement.

According to an embodiment, the barometric pressure represented by the data obtained during the relative movement or the data obtained after the relative movement may be different from the actual barometric pressure.

According to an embodiment, a volume inside the electronic device 101 may decrease while the electronic device 101 changes from the second state to the first state. For example, a decrease in volume may occur as at least one of a space, volume, size, or gap between components inside the electronic device 101 changes. For example, when changing from the second state to the first state, as the second housing part and the first housing part become close to each other, at least one value of the space, volume, size, or gap between components inside the electronic device 101 may decrease or be reduced.

According to an embodiment, as the volume inside the electronic device 101 decreases while changing from the second state to the first state, the barometric pressure inside the electronic device 101 may be higher than the actual barometric pressure (or ambient barometric pressure outside the electronic device 101). While changing from the second state to the first state, and after changing from the second state to the first state, air inside the electronic device 101 may escape to the outside of the electronic device 101 by at least one vent hole disposed in at least one area 291, 293, 295, and 297. As air flows out via the vent hole, the barometric pressure inside the electronic device 101 may become the same as the actual barometric pressure. Concretely, a first barometric pressure value represented by the data obtained from one or more barometric pressure sensors 510 may temporarily increase while the second housing part 220 moves toward the first housing part 210. For example, the first barometric pressure value may be temporarily increased above the ambient barometric pressure value outside the electronic device 101.

In an embodiment, as the volume of the electronic device 101 increases while changing from the first state to the second state, the barometric pressure inside the electronic device 101 may be lower than the actual barometric pressure (or ambient barometric pressure outside the electronic device 101). While changing from the first state to the second state, and after changing from the first state to the second state, air outside the electronic device 101 may enter the inside of the electronic device 101 by the vent hole disposed in the at least one area 291, 293, 295, and 297. As air flows in via the vent hole, the barometric pressure inside the electronic device 101 may become the same as the actual barometric pressure. Concretely, a second barometric pressure value represented by the data obtained from one or more barometric pressure sensors 510 may be temporarily decreased while the second housing part 220 moves away from the first housing part 210. The second barometric pressure value may be temporarily decreased to below the ambient barometric pressure value.

The graph 600 in Fig. 6A illustrates speed 610 of the relative movement from the second state to the first state, e.g. the speed of the motor 361, and barometric pressure 615 represented by the data measured by the at least one barometric pressure sensor 510. The graph 605 in Fig. 6B illustrates speed 620 of the relative movement from the first state to the second state, e.g. the speed of the motor 361, and barometric pressure 625 represented by data measured by the barometric pressure sensor 510. Herein, the barometric pressures 615 and 625 may represent a degree of change from reference barometric pressure. The reference barometric pressure may be the barometric pressure of a place where the electronic device 101 is located, or the barometric pressure inside the electronic device 101 immediately before the relative movement of the electronic device 101.

Referring to the graph 600 and the graph 605, when a control signal for a relative movement of the processor 120 occurs at timing t0, the motor 361 is driven so that the speeds 610 and 620 of the motor 361 reach the maximum speed at timing t1. With respect to graph 600 of Fig. 6A, the volume of the electronic device 101 changes, and the barometric pressure 615 may increase at timing between the timing t0 and the timing t1. The barometric pressure 615 may gradually decrease between timing t2 when the speed 610 of the motor 361 decelerates from the maximum speed and timing t3 when it stops. With respect to graph 605 of Fig. 6B, the volume of the electronic device 101 changes, and the barometric pressure 625 may be decreased at timing between the timing t0 and the timing t1. In addition, the barometric pressure 625 may gradually increase between the timing t2 when the speed 620 of the motor 361 decelerates from the maximum speed and the timing t3 when it stops. However, the barometric pressures 615 and 625 may still be different from the reference barometric pressure at timing between the timing t4 after the timing t3. Therefore, the barometric pressure provided by the electronic device 101 may be different from the actual barometric pressure at the timing between the timing t0 and the timing t1 and the timing between the timing t3 and the timing t4.

According to an embodiment, in case that the barometric pressure provided by the electronic device 101 is different from the actual barometric pressure, an error may occur in a calculation operating based on the barometric pressure. For example, during a change between the first state and the second state, barometric pressure displayed by the electronic device 101 or altitude based on the barometric pressure may be different from the barometric pressure or altitude of the place where the actual electronic device 101 is located. This may result in providing incorrect information to a user. In addition, for example, during the change between the first state and the second state, a map application (e.g., navigation) of the electronic device 101 may display, via the display 230, a place, which is different from the place where the actual electronic device 101 is located, as where the electronic device 101 is located. In addition, in case that an error occurs in a calculation operating based on barometric pressure in an emergency situation (e.g., a distress situation), it may be difficult to convey accurate information on the emergency situation. For example, in case that the electronic device 101 provide incorrect location information or incorrect altitude information to a user.

Therefore, a method for providing barometric pressure information similar to the actual barometric pressure may be required during and after the relative movement.

Hereinafter, an operation of the electronic device 101 to provide barometric pressure information similar to the actual barometric pressure during and after the relative movement will be described.

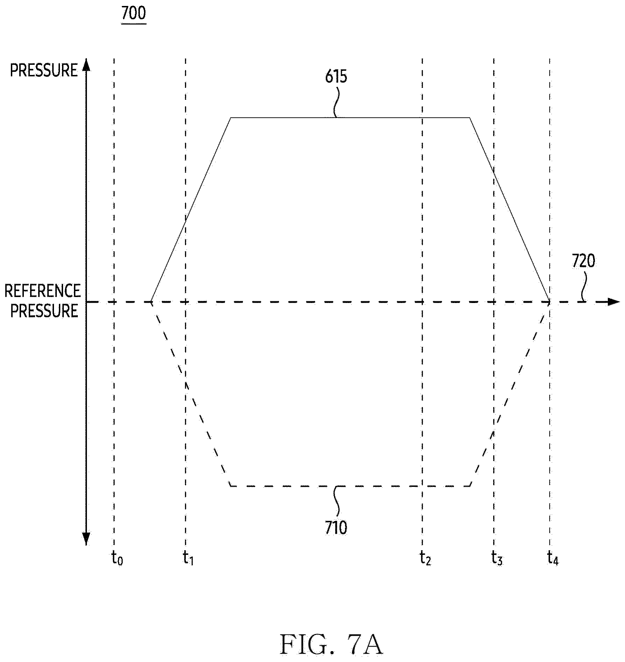

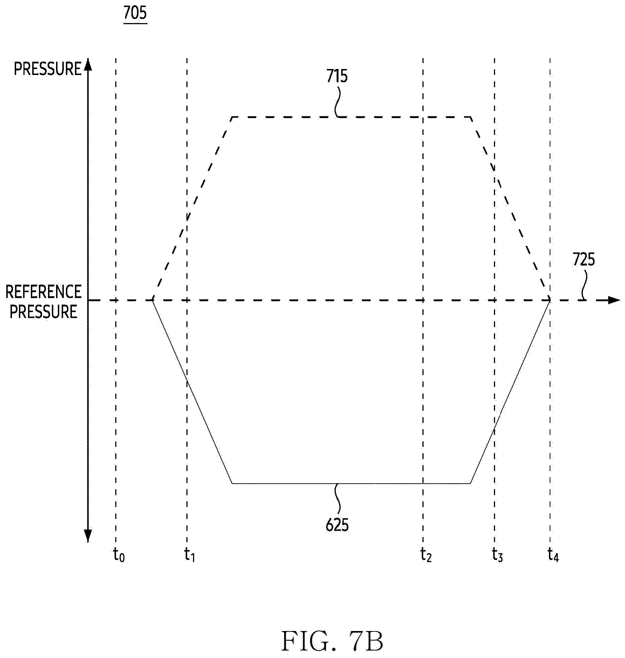

FIG. 7A is a graph 700 illustrating an offset according to a relative movement from a second state to a first state, according to an embodiment. FIG. 7B is a graph 705 illustrating an offset according to a relative movement from a first state to a second state, according to an embodiment.

For description of FIGS. 7A and 7B, components of an electronic device 101 and a structure of the electronic device 101 described with reference to FIGS. 1, 2A, 2B, 2C, 2D, 3A, 3B, 4A, 4B, and 5 may be referred to.

According to an embodiment, a processor 120 may obtain offset information. The processor 120 may obtain the offset information in response to identifying the relative movement. Herein, the offset information may be stored in the memory 130. For example, the offset information may be stored in the memory 130 as a lookup table. For example, the offset information may include a plurality of offset values. However, it is not limited thereto. For example, the processor 120 may calculate an offset. For example, the processor 120 may calculate an offset corresponding to the relative movement. For example, the processor 120 may calculate the offset based on the amount of change in volume corresponding to the relative movement and a diameter of a vent hole or vent holes.

According to an embodiment, the processor 120 may identify a portion of the offset information corresponding to the relative movement. The processor 120 may identify a portion of the offset information corresponding to a change in a physical quantity according to the relative movement. Herein, the change in the physical quantity according to the relative movement may be identified via a sensor 520. For example, the change in the physical quantity according to the relative movement may be identified via an acceleration sensor or a proximity sensor.

In an embodiment, the processor 120 may identify a portion of the offset information corresponding to a relative movement speed with respect to a first housing part 210 of a second housing part 220. For example, the processor 120 may identify a portion of the offset information corresponding to a displacement with respect to the first housing part 210 of the second housing part 220. For example, the processor 120 may identify a portion of the offset information corresponding to an amount of relative movement that occurs between the first housing part 210 and the second housing part 220. For example, the processor 120 may identify a portion of the offset information corresponding to relative acceleration with respect to the first housing part 210 of the second housing part 220. The processor 120 may identify an offset value corresponding to the relative movement among a plurality of offset values. The processor 120 may identify an offset value corresponding to the change in the physical quantity according to the relative movement among the plurality of offset values. The processor 120 may identify an offset value corresponding to a movement from a current state (e.g., a first state) to another state (e.g., a second state or an intermediate state) among the plurality of offset values. Herein, a portion of the offset information may correspond to at least one offset value among the plurality of offset values.

According to an embodiment, referring to the graph 700, the processor 120 may identify a portion 710 of the offset information according to a relative movement from the second state to the first state. Herein, a change pattern of the portion 710 of the offset information may be opposite to a change pattern of barometric pressure 615 represented by data measured by a barometric pressure sensor 510 according to the relative movement from the second state to the first state. Herein, the fact that the change pattern is opposite may mean that the portion 710 of the offset information and the barometric pressure 615 are substantially symmetrical based on a reference barometric pressure. The fact that the change pattern is opposite may mean that a reference barometric pressure 720 may be derived based on a sum of the portion 710 of the offset information and the barometric pressure 615.

Referring to the graph 705, the processor 120 may identify a portion 715 of the offset information according to a relative movement from the first state to the second state. Herein, a change pattern of the portion 715 of the offset information may be opposite to a change pattern of barometric pressure 625 represented by data measured by the barometric pressure sensor 510 according to the relative movement from the first state to the second state. Herein, the fact that the change pattern is opposite may mean that the portion 715 of the offset information and the barometric pressure 625 are axially symmetric with respect to the reference barometric pressure. Herein, the fact that the change pattern is opposite may mean that the portion 715 of the offset information and the barometric pressure 625 cancel each other. The fact that the change pattern is opposite may mean that a reference barometric pressure 725 may be derived based on a sum of the portion 715 of the offset information and the barometric pressure 625.

In an embodiment, the processor 120 may identify a portion of the offset information corresponding to time of the relative movement. The processor 120 may identify a portion of the offset information corresponding to time elapsed after the relative movement began. The processor 120 may identify a portion of the offset information corresponding to time elapsed after the relative movement is completed. Herein, the elapsed time may exist within a reference time range. The reference time range may be time required for the barometric pressure inside the electronic device 101 to be similar to the barometric pressure where the electronic device 101 is located after the relative movement is completed. The reference time range may be determined based on the relative movement and the diameter of a vent hole. For example, the larger a size of a vent hole, the shorter the reference time range may be. For example, the smaller the displacement of the relative movement, the shorter the reference time range may be. For example, the lower the speed of the relative movement, the shorter the reference time range may be. A portion of the offset information corresponding to the elapsed time may be used to provide barometric pressure information similar to the actual barometric pressure even after the relative movement.

According to an embodiment, the processor 120 may identify a portion of the offset information corresponding to a state (operation state or environmental state) of the electronic device 101. The processor 120 may identify a portion of the offset information corresponding to an internal temperature, and/or an external temperature of the electronic device 101. The processor 120 may identify a portion of the offset information corresponding to the barometric pressure before the relative movement. The processor 120 may identify a portion of the offset information corresponding to a motion of the electronic device 101. The processor 120 may identify a portion of the offset information corresponding to the temperature, the barometric pressure before the relative movement, the motion of the electronic device 101, or a combination thereof.

According to an embodiment, the processor 120 may identify a portion of the offset information corresponding to the relative movement and the state (operation state or environmental state) of the electronic device 101. For example, the processor 120 may identify a portion of the offset information based on the lookup table stored in the memory 130. Herein, the lookup table may include offsets according to the relative movement, the state of the electronic device 101, or a combination thereof.

According to an embodiment, the processor 120 may identify the barometric pressure based on the identified offset information. The processor 120 may identify the barometric pressure based on the identified portion of the offset information. For example, the processor 120 may identify the barometric pressure based on the obtained data and offset information. The processor 120 may adjust the barometric pressure value determined based on the data obtained by the one or more pressure sensors 510 by using one of the offset values related to the identified relative movement.

According to an embodiment, the processor 120 may adjust the obtained data based on the offset information. The processor 120 may identify the barometric pressure based on the adjusted data. Herein, the offset information may represent a value of a same type (or the same dimension) as the obtained data. For example, the offset information and the obtained data may represent a resistance value. For example, the processor 120 may adjust the resistance value represented by the obtained data based on the offset information. The processor 120 may identify the barometric pressure based on the adjusted resistance value. However, it is not limited thereto.

According to an embodiment, the processor 120 may identify the initial barometric pressure based on the obtained data. The processor 120 may identify the barometric pressure by adjusting the initial barometric pressure based on the offset information. Herein, the offset information may represent barometric pressure. For example, the processor 120 may identify the barometric pressure by adjusting the initial barometric pressure, which is identified based on the obtained data, based on barometric pressure represented by the offset information. However, it is not limited thereto.

As described above, the electronic device 101 may provide barometric pressure information similar to the actual barometric pressure during and after the relative movement. In addition, the electronic device 101 may provide altitude information similar to the actual altitude during and after the relative movement.

Hereinafter, an operation of the electronic device 101 for providing the barometric pressure value will be described.

In an embodiment, the processor 120 may identify a relative movement of the first housing part 210 and the second housing part 220 with respect to each other. For example, the processor 120 may identify a relative movement for changing the housing from the current state to a state other than the current state. For example, the current state may be the first state, the second state, or the intermediate state. For example, the other state may be a state other than the current state. For example, in case that the current state is the intermediate state, the other state may be the first state, the second state, or another intermediate state.

In an embodiment, the processor 120 may obtain offset information. The processor 120 may obtain an offset value relating to a relative movement for changing from the current state to a state other than the current state among a plurality of offset values. Herein, the offset value corresponding to the relative movement may correspond to a relative movement from the first state to the second state. The offset value corresponding to the relative movement may correspond to a relative movement from the second state to the first state. The offset value corresponding to the relative movement may correspond to a relative movement from the first state or the second state to the intermediate state. The offset value corresponding to the relative movement may correspond to a relative movement from the intermediate state to the first state or the second state. Herein, the offset values may be stored in the memory 130 as a lookup table. However, it is not limited thereto. The processor 120 may calculate an offset value corresponding to the relative movement for changing from the current state to a state other than the current state.

In an embodiment, the processor 120 may identify the barometric pressure based on the identified offset information. The processor 120 may identify the barometric pressure based on the identified portion of the offset information. For example, the processor 120 may identify the barometric pressure based on the obtained data and offset information.

In an embodiment, the processor 120 may adjust the obtained data based on the offset information. The processor 120 may identify the barometric pressure based on the adjusted data.

In an embodiment, the processor 120 may identify initial barometric pressure based on the obtained data. The processor 120 may identify the barometric pressure by adjusting the initial barometric pressure based on the offset information.

Hereinafter, an operation of the electronic device 101 for processing the barometric pressure value during a relative movement will be described.

In an embodiment, the processor 120 may identify the relative movement of the first housing part 210 and the second housing part 220. For example, the processor 120 may identify the relative movement for changing the housing from the current state to a state other than the current state. For example, the current state may be the first state, the second state, or the intermediate state. For example, the other state may be a state other than the current state. For example, in case that the current state is the intermediate state, the other state may be the first state, the second state, or another intermediate state.

In an embodiment, the processor 120 may not rely on the barometric pressure sensor 510. The processor 120 may not rely on the barometric pressure sensor 510 during a relative movement. Herein, not relying on the barometric pressure sensor 510 may mean that the processor 120 identifies the barometric pressure value via components other than the barometric pressure sensor 510. Not relying on the barometric pressure sensor 510 may mean that the processor 120 ignores data outputted by the barometric pressure sensor 510. The fact that the processor 120 ignores the data outputted by the barometric pressure sensor 510 may mean that it ignores fluctuation in the barometric pressure value that changes during a relative movement. The fluctuation in the barometric pressure value that changes during the relative movement may mean fluctuation from a barometric pressure value before the relative movement.

In an embodiment, the processor 120 may deactivate the barometric pressure sensor 510 during the relative movement of the first housing part 210 and the second housing part 220. Herein, deactivating the barometric pressure sensor 510 may mean that the processor 120 does not rely on the barometric pressure sensor 510. Not relying on the barometric pressure sensor 510 may mean that the processor 120 controls the barometric pressure sensor 510 to stop operation. Not relying on the barometric pressure sensor 510 may mean that the processor 120 takes action against the barometric pressure sensor 510 so that the barometric pressure sensor 510 stops outputting data. For example, taking action against the barometric pressure sensor 510 so that the barometric pressure sensor 510 stops outputting data may mean turning off the barometric pressure sensor 510. For example, taking action against the barometric pressure sensor 510 so that the barometric pressure sensor 510 stops outputting data may mean switching the barometric pressure sensor 510 to a standby state.

In an embodiment, the processor 120 may determine the barometric pressure value obtained before the relative movement of the second housing part 220 with respect to the first housing part 210 as the barometric pressure value during the relative movement. Herein, before the relative movement of the second housing part 220 with respect to the first housing part 210 may be a timing before a reference time from a timing of starting the movement. Herein, before the relative movement of the second housing part 220 with respect to the first housing part 210 may include a time range set from a timing before the reference time.

In an embodiment, the processor 120 may determine barometric pressure value based on data obtained via the sensor 520 as the barometric pressure value during the relative movement. For example, the processor 120 may obtain data representing a change in the physical quantity via the sensor 520. For example, the processor 120 may calculate the barometric pressure value based on the data representing the change in the physical quantity.

In an embodiment, the processor 120 may determine barometric pressure value obtained from an external electronic device 102 as the barometric pressure value during the relative movement. For example, the processor 120 may receive data from the external electronic device 102 via a communication circuitry (e.g., the communication module 190 of FIG. 1). Herein, data from the external electronic device 102 may be related to barometric pressure value obtained from the external electronic device 102. For example, the data from the external electronic device 102 may represent the barometric pressure value obtained from the external electronic device 102.

In an embodiment, the processor 120 may, during the relative movement, determine barometric pressure value obtained without relying on the barometric pressure sensor 510 as barometric pressure value during the relative movement. The processor 120 may, during the relative movement, determine a value obtained by adding a predetermined fluctuation value to the barometric pressure value obtained without relying on the barometric pressure sensor 510 as the barometric pressure value during the relative movement.

In an embodiment, the processor 120 may, while the relative movement is not identified, determine barometric pressure value obtained via the barometric pressure sensor 510 as barometric pressure value while the relative movement is not identified. For example, the processor 120 may activate the barometric pressure sensor 510 after the relative movement is completed. Herein, activating the barometric pressure sensor 510 may mean that the processor 120 takes action against the barometric pressure sensor 510 so that the barometric pressure sensor 510 starts outputting data. For example, taking action against the barometric pressure sensor 510 so that the barometric pressure sensor 510 starts outputting data may mean turning on the barometric pressure sensor 510. For example, taking action against the barometric pressure sensor 510 so that the barometric pressure sensor 510 starts outputting data may mean that the barometric pressure sensor 510 is switched to an operating state other than the standby state.

According to an embodiment, the processor 120 of the electronic device 101 may use the barometric pressure obtained before the relative movement during the relative movement. For example, the processor 120 may use the barometric pressure obtained before the relative movement as the barometric pressure obtained during the relative movement. For example, the processor 120 may display the barometric pressure obtained before the relative movement, or an altitude based on the barometric pressure, via a display 230 during the relative movement. For example, the processor 120 may provide the barometric pressure obtained during the relative movement, or the altitude based on the barometric pressure, to an application running during the relative movement. For example, the processor 120 may display a value obtained by adding a predetermined fluctuation value to the barometric pressure obtained before the relative movement, or the altitude based on the sum value via the display 230 during the relative movement. For example, the processor 120 may provide a summed value of fluctuation values, or the altitude based on the summed value, to the application running during the relative movement.

Hereinafter, an operation of the electronic device 101 for updating the offset information will be described.

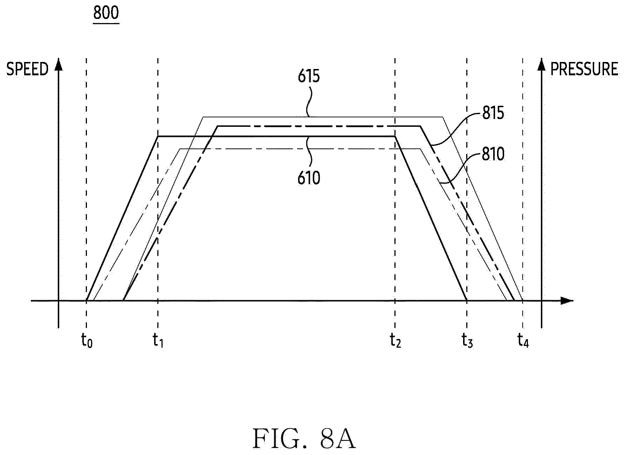

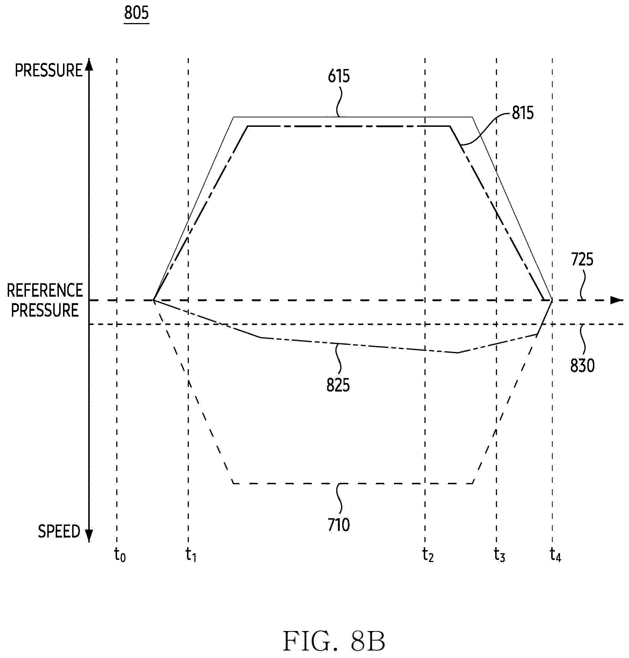

FIG. 8A is a graph 800 illustrating barometric pressure according to a relative movement from a second state to a first state. FIG. 8B is a graph 805 illustrating an offset according to the relative movement from the second state to the first state.

For description of FIGS. 8A and 8B, components of an electronic device 101 and a structure of the electronic device 101 described with reference to FIGS. 1, 2A, 2B, 2C, 2D, 3A, 3B, 4A, 4B, and 5 may be referred to.

According to an embodiment, a motor 361 of the electronic device 101 may age as it is used. Herein, the aging of the motor 361 may mean that speed of the motor 361 is lower than speed of the initial motor 361 at the beginning of the lifetime of the motor. The aging of the motor 361 may mean that reactivity of the motor 361 is lower than reactivity of the initial motor 361.

According to an embodiment, referring to the graph 800, speed 815 of the aged motor 361 may decrease compared to speed 610 of the initial motor 361. Therefore, as the motor 361 ages, time of a relative movement may become longer. As the speed 815 of the motor 361 decreases, barometric pressure 815 inside the electronic device 101 measured by a barometric pressure sensor 510 may also change less than barometric pressure 615 measured when the motor 361 was not aged. Accordingly, in case that offset information is not updated even after the motor 361 is aging, possibility of providing incorrect barometric pressure information to a user increases.

In an embodiment, a processor 120 may determine whether to update the offset information based on the obtained data. The processor 120 may determine whether to update the offset information based on the obtained data and the offset information.

According to an embodiment, the processor 120 may determine whether to update the offset information based on the obtained data and barometric pressure obtained based on the offset information. For example, in case that the barometric pressure adjusted based on the offset information is out of a reference barometric pressure range, the processor 120 may determine to update the offset information. However, it is not limited thereto.

According to an embodiment, the processor 120 may determine whether to update the offset information based on a difference between barometric pressure represented by the obtained data and an offset represented by the offset information. For example, in case that the difference between the barometric pressure represented by the obtained data and the offset represented by the offset information is out of the reference barometric pressure range, the processor 120 may determine to update the offset information. However, it is not limited thereto.

According to an embodiment, referring to the graph 805, the processor 120 may identify a portion 710 of offset information of the barometric pressure 815 inside the electronic device 101 measured by the barometric pressure sensor 510. The processor 120 may identify a difference 825 between the internal barometric pressure 815 and the offset represented by the portion 710 of the offset information. According to an embodiment, the processor 120 may identify that the difference 825 as being outside a reference barometric pressure range or value 830. Therefore, in case of the graph 805, the processor 120 may determine to update the offset information. Herein, the reference barometric pressure range or value 830 may be set based on the reference barometric pressure 725.

According to an embodiment, the processor 120 may determine whether to update the offset information based on the motion sensor. For example, the processor 120 may identify a motion (or movement) of the electronic device 101 based on the motion sensor. For example, the processor 120 may cause the relative movement between a first housing part 210 and a second housing part 220 if the motion (or movement) of the electronic device 101 is below a reference movement range or a threshold. For example, the processor 120 may determine whether to update the offset information based on the difference between barometric pressure represented by the data obtained if the motion (or movement) is below a reference movement range or a threshold and a barometric pressure is represented by a portion of the offset information. Herein, the motion (or movement) of the electronic device 101 may mean that the electronic device 101 moves in any direction in three-dimensional space. The electronic device 101 may move relative to ground. Herein, moving the electronic device 101 may mean that the entire electronic device 101 moves by an external force. Moving the electronic device 101 may mean that the first housing part 210 and the second housing part 220 of the electronic device 101 are moved relative to each other by a force (e.g., a manually applied force) different from the force intended for relative movement of the housing parts (e.g., the power of the motor 361).

According to an embodiment, the processor 120 may determine whether to update the offset information based on a change in barometric pressure caused by the motion (or movement). For example, in case that the difference between the barometric pressure represented by the obtained data and the offset represented by the offset information is out of the change in barometric pressure caused by the motion (or movement), the processor 120 may determine to update the offset information. However, it is not limited thereto.

According to an embodiment, the processor 120 may determine whether to update the offset information based on the obtained data and the other data obtained from the barometric pressure sensor of the external electronic device. For example, the processor 120 may determine to update the offset information in case that the difference between the barometric pressure represented by the obtained data and the barometric pressure represented by the other data is out of the reference barometric pressure range. However, it is not limited thereto.

According to an embodiment, the processor 120 may collect data for updating the offset information. In response to determining to update the offset information, the processor 120 may obtain data for updating the offset information. For example, the processor 120 may obtain data for updating the offset information during the relative movement between the first housing part 210 and the second housing part 220. For example, the processor 120 may obtain data for updating the offset information during a reference time after the relative movement between the first housing part 210 and the second housing part 220. Herein, the reference time may be predetermined by the size of a vent hole or a plurality of vent holes. For example, when the size of the vent hole is large, the reference time may be set short. The reference time may be determined based on speed, displacement, or acceleration of the relative movement. For example, the reference time may be longer as the speed, displacement, or acceleration of the relative movement increases.

According to an embodiment, data for updating the offset information may be obtained via the barometric pressure sensor 510 of the electronic device 101. For example, the processor 120 may obtain data for updating the offset information via the barometric pressure sensor 510 while the motion (or movement) of the electronic device 101 is below the reference movement range. For example, the processor 120 may obtain data for updating the offset information via the barometric pressure sensor 510 during the relative movement between the first housing part 210 and the second housing part 220. For example, the processor 120 may obtain data for updating the offset information via the barometric pressure sensor 510 during the relative movement while the motion (or movement) of the electronic device 101 is below the reference movement range. For example, the processor 120 may obtain data for updating the offset information via the barometric pressure sensor 510 during the reference time after the relative movement while the motion (or movement) of the electronic device 101 is below the reference movement range.

According to an embodiment, the processor 120 may obtain data for updating the offset information via a motion sensor while the motion (or movement) of the electronic device 101 is below the reference movement range. For example, the processor 120 may obtain data for updating the offset information via the motion sensor during the relative movement between the first housing part 210 and the second housing part 220. For example, the processor 120 may calculate a change in volume of the electronic device 101 caused by the relative movement identified via the motion sensor. For example, the processor 120 may calculate a change in barometric pressure inside the electronic device 101 corresponding to the change in the volume of the electronic device 101.

According to an embodiment, data for updating the offset information may be obtained from an external electronic device 102. For example, the processor 120 may request data for updating the offset information from the external electronic device 102 via a communication circuitry (e.g., the communication module 190 of FIG. 1). The processor 120 may obtain data for updating the offset information from the external electronic device 102 in response to the request for data. Herein, the processor 120 may request data obtained during the relative movement from the external electronic device 102. The processor 120 may request data obtained during the relative movement from the external electronic device 102. The processor 120 may request data obtained during the reference time after the relative movement from the external electronic device 102.

According to an embodiment, the processor 120 may update the offset information. For example, the processor 120 may update the offset information in response to the determination. For example, the processor 120 may update the offset information in response to determining to update the offset information.

According to an embodiment, the processor 120 may update the offset information based on data for updating the offset information. For example, the processor 120 may update the offset information based on barometric pressure represented by data for updating the offset information. For example, in case that data for updating the offset information is obtained via the barometric pressure sensor 510, the processor 120 may update a negative value of the barometric pressure represented by data for updating the offset information as an offset. For example, in case that data for updating the offset information is obtained via the motion sensor, the processor 120 may update the negative value of barometric pressure represented by data for updating the offset information as an offset. For example, in case that data for updating the offset information is obtained from the external electronic device 102, the processor 120 may update a value obtained by subtracting the barometric pressure represented by data for identifying the barometric pressure, which is obtained via the barometric pressure sensor 510, from barometric pressure represented by data for updating the offset information as an offset.

Hereinafter, an operation of the electronic device 101 for providing information based on barometric pressure obtained according to the relative movement will be described.

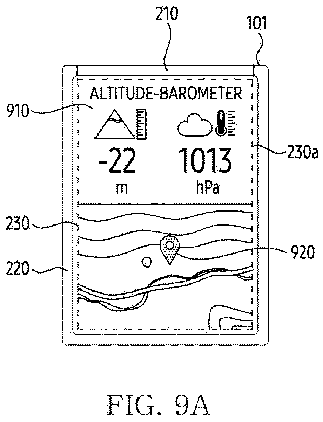

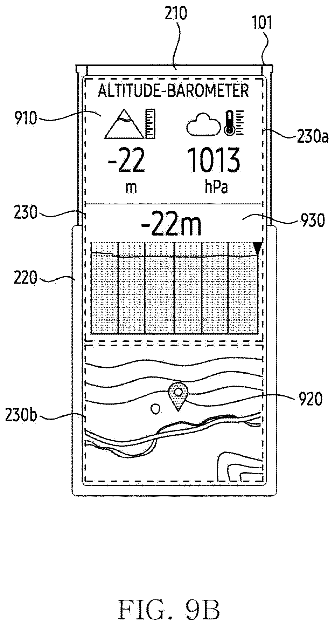

FIG. 9A illustrates an example of a screen in which an electronic device 101 provides information based on barometric pressure according to a relative movement during a first state. FIG. 9B illustrates an example of a screen in which the electronic device 101 provides information based on barometric pressure according to the relative movement during a second state.

For description of FIGS. 9A and 9B, components of the electronic device 101 and a structure of the electronic device 101 described with reference to FIGS. 1, 2A, 2B, 2C, 2D, 3A, 3B, 4A, 4B, and 5 may be referred to.

In an embodiment, a processor 120 may obtain at least a portion of coordinate information of the electronic device 101 during the relative movement based on the barometric pressure. The processor 120 may obtain at least a portion of coordinate information of the electronic device 101 during the relative movement based on the barometric pressure identified during the relative movement. The processor 120 may obtain altitude information of the electronic device 101 during the relative movement based on the barometric pressure identified during the relative movement. For example, the processor 120 may obtain 1013 hPa as barometric pressure. For example, the processor 120 may obtain an altitude -22 m where the electronic device 101 is located based on the barometric pressure 1013 hPa.

According to an embodiment, the processor 120 may obtain the remaining portion of the coordinate information based on the altitude information. For example, the processor 120 may obtain the remaining portion (e.g., latitude or longitude) of the coordinate information by using the altitude information and location information based on a global navigation satellite system (GNSS). For example, the processor 120 may obtain the remaining portion (e.g., latitude or longitude) of the coordinate information by using the altitude -22m where the electronic device 101 is located and location information based on GNSS.

According to an embodiment, the processor 120 may provide altitude information to a user. For example, the processor 120 may display altitude information via a display 230. Referring to FIG. 9A, the processor 120 may display the barometric pressure 1013 hPa, the altitude -22m, or location information. The processor 120 may display a pin 920 representing an area where the electronic device 101 is located on the map area via a screen 910. Referring to FIG. 9B, the processor 120 may further display an altitude graph 930. For example, referring to the altitude displayed on the altitude graph 930, it may be seen that the altitude does not change rapidly even with a relative movement. Although the barometric pressure measured by the barometric pressure sensor 510 changes according to the relative movement, the corrected barometric pressure based on the offset information and the altitude based on the corrected barometric pressure may not change.

Hereinafter, an operation of the electronic device 101 for interaction with a user related to the offset information will be described.

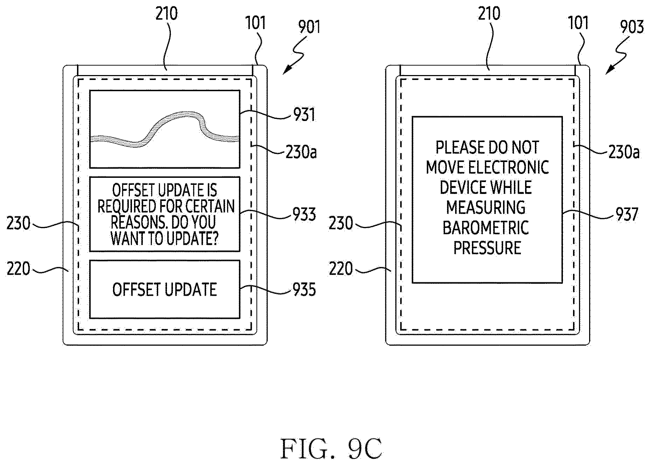

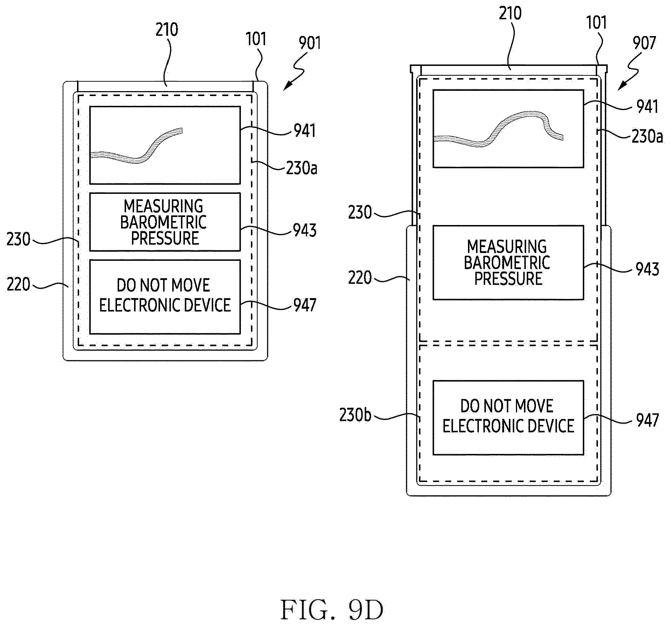

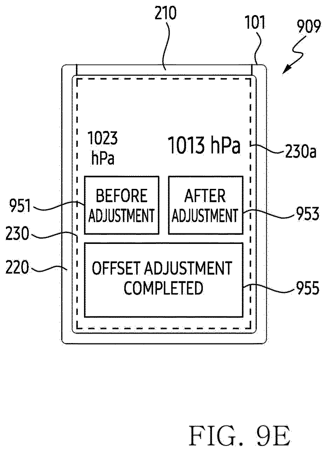

FIG. 9C illustrates an example of a screen for updating an offset. FIG. 9D illustrates an example of a screen containing a guide during barometric pressure measurement for updating an offset. FIG. 9E illustrates an example of a screen representing completion of offset update.

For description of FIGS. 9C, 9D, and 9E, components of an electronic device 101 and a structure of the electronic device 101 described with reference to FIGS. 1, 2A, 2B, 2C, 2D, 3A, 3B, 4A, 4B, and 5 may be referred to.

According to an embodiment, the processor 120 may relatively move the second housing part 220 relative to the first housing part 210. For example, the processor 120 may relatively move the second housing part 220 relative to the first housing part 210 by using the motor 361.

According to an embodiment, the processor 120 may identify the barometric pressure based on data obtained during the relative movement and a portion of the offset information. Herein, the processor 120 may identify a portion of the offset information corresponding to the relative movement.

According to an embodiment, the processor 120 may determine whether to calibrate (or update) the offset information based on the barometric pressure represented by data obtained during the relative movement. For example, the processor 120 may determine to calibrate (or update) the offset information in response to the barometric pressure being out of the reference barometric pressure range. However, it is not limited thereto. For example, the processor 120 may display the screen inquiring about the calibration (or update) of the offset information via the display 230 in response to the barometric pressure being out of the reference barometric pressure range. Thereafter, the processor 120 may determine to calibrate (or update) the offset information in response to identifying a request for the calibration (or update) of the offset information.

Referring to FIG. 9C, in state 901, the electronic device 101 may display a button 935 that allows selection of the calibration (or update) of the offset information. In addition, in state 901, the electronic device 101 may display a graph 931 representing the barometric pressure obtained during the previous relative movement. In addition, in state 901, a text box 933 notifying that the calibration (or update) of the offset information is required may be displayed.

According to an embodiment, in state 901, the electronic device 101 may transition to state 903 in response to an input in which a user selects the button 935.

According to an embodiment, the processor 120 may output a user interface (UI) that guides the calibration (or update) of the offset information to the user. In response to determining to calibrate (or update) the offset information, the processor 120 may output the user interface that guides the calibration (or update) of the offset information to the user. For example, the processor 120 may display a screen containing the user interface that guides the calibration (or update) of the offset information via the display 230. Herein, the user interface that guides the calibration (or update) may include a guide for a user's operation required for the electronic device 101. For example, the user's operation required for the electronic device 101 may be related to the movement of the electronic device 101. For example, the guide for the user's operation may guide the user not to move the electronic device 101. For example, the guide for the user's operation may guide the user to place the electronic device 101 on a designated place (e.g., a flat place).

According to an embodiment, in state 903, the electronic device 101 may display a text box 937 that guides the calibration (or update) of the offset information. The text box 937 may include a guidance phrase regarding an action required of the user during barometric pressure measurement. For example, the text box 937 may include the phrase "Please do not move the electronic device during barometric pressure measurement!".

In an embodiment, the processor 120 may obtain data for calibrating the offset information via the barometric pressure sensor 510. In response to determining to calibrate (or update) the offset information, the processor 120 may obtain data for calibrating the offset information via the barometric pressure sensor 510. In response to displaying a screen that guides the calibration (or update) of the offset information, the processor 120 may obtain data for calibrating the offset information via the barometric pressure sensor 510. For example, in response to displaying the screen that guides the calibration (or update) of the offset information, the processor 120 may relatively move the second housing part 220 relative to the first housing part 210. In addition, in response to displaying the screen that guides the calibration (or update) of the offset information, the processor 120 may obtain data for calibrating the offset information via the barometric pressure sensor 510 while relatively moving the second housing part 220 relative to the first housing part 210. The processor 120 may obtain data for calibrating the offset information via the barometric pressure sensor 510 in response to an input to the screen that guides the calibration (or update) of the offset information.

In an embodiment, the processor 120 may identify a motion (or movement) of the electronic device 101 based on the motion sensor. In response to determining to calibrate (or update) the offset information, the processor 120 may identify the motion (or movement) of the electronic device 101. The processor 120 may identify the motion (or movement) of the electronic device 101 in response to displaying the screen that guides the calibration (or update) of the offset information.

According to an embodiment, the processor 120 may cause the relative movement between the first housing part 210 and the second housing part 220 while the motion (or movement) of the electronic device 101 is below a reference movement range. The processor 120 may cause the relative movement between the first housing part 210 and the second housing part 220 to obtain data for calibrating the offset information via the barometric pressure sensor 510 while the motion (or movement) of the electronic device 101 is below the reference movement range. Herein, the motion (or movement) of the electronic device 101 may mean that the electronic device 101 moves. Herein, moving the electronic device 101 may mean that the entire electronic device 101 moves by an external force. Moving of the electronic device 101 may mean that the entire device 101 moves by a force other than a force intended for a relative movement by the first housing part 210 and the second housing part 220 of the electronic device 101 (e.g., power of the motor 361).

According to an embodiment, the processor 120 may cause the relative movement of the second housing part 220 with respect to the first housing part 210 at least twice. For example, the processor 120 may relatively move the second housing part 220 so that the housing has a state (e.g., the second state) different from the current state (e.g., the first state). Thereafter, the processor 120 may relatively move the second housing part 220 so that the housing has a previous state (e.g., the first state) from the different state (e.g., the second state).

According to an embodiment, the processor 120 may obtain first data for identifying the barometric pressure while relatively moving the second housing part 220 so that the housing has a state (e.g., the second state) different from the current state (e.g., the first state). In addition, the processor 120 may obtain second data for identifying the barometric pressure while relatively moving the second housing part 220 so that the housing has a previous state (e.g., the first state) from the different state (e.g., the second state).

Referring to FIG. 9D, in state 905 and state 907, the electronic device 101 may display a graph 941 or a text box 943 guiding that barometric pressure is being measured. The state 905 may describe a situation in which the electronic device 101 moves from the first state to the second state, and state 907 may describe a situation in which the electronic device 101 moves from the second state to the first state. In addition, in state 905 and state 907, the electronic device 101 may display a text box 947 that guides the calibration (or update) of the offset information. The text box 947 may include a guidance phrase regarding an action required of the user during barometric pressure measurement.

According to an embodiment, the processor 120 may update the offset information based on data obtained during the relative movement. For example, the processor 120 may update the offset information based on the first data and the second data.

According to an embodiment, the processor 120 may display an update result of the offset information via the display 230. For example, referring to FIG. 9E, in state 909, the electronic device 101 may simultaneously display the barometric pressure 951 before updating the offset information and the barometric pressure 953 after updating the offset information. In addition, in state 909, the electronic device 101 may display a text box 955 representing that updating of offset information is complete.

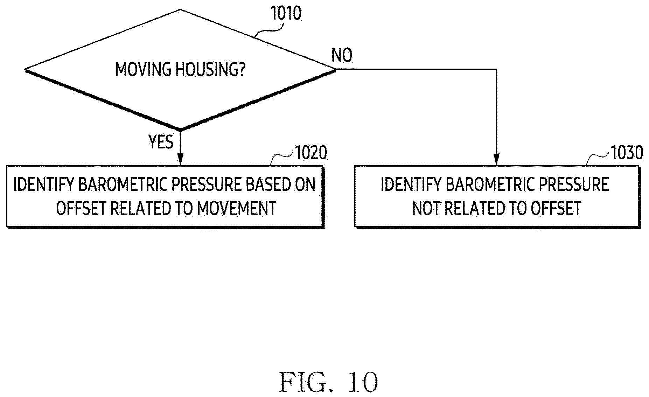

FIG. 10 is a flowchart illustrating a method performed in an electronic device.

For description of FIG. 10, components of an electronic device 101 and a structure of the electronic device 101 described with reference to FIGS. 1, 2A, 2B, 2C, 2D, 3A, 3B, 4A, 4B, and 5 may be referred to.

Referring to FIG. 10, in operation 1010, a processor 120 may identify a movement of a housing. The processor 120 may identify a relative movement of the housing. The processor 120 may identify a relative movement of the first housing part 210 and the second housing part 220. For example, the processor 120 may identify the relative movement based on a signal with the motor 361. For example, the processor 120 may identify the relative movement based on control information for driving the motor 361. For example, the processor 120 may identify the relative movement based on a signal from the sensor 520.

In operation 1020, the processor 120 may identify barometric pressure based on an offset related to the movement. The processor 120 may identify the barometric pressure based on the offset related to the movement of the housing. The processor 120 may identify the barometric pressure based on the offset related to the relative movement of the housing. The processor 120 may identify the barometric pressure based on the offset related to the relative movement between the first housing part 210 and the second housing part 220.

In an embodiment, the processor 120 may obtain offset information in response to identifying the relative movement between the housing parts 220. The processor 120 may obtain offset information in response to identifying the relative movement between the first housing part 210 and the second housing part 220. The processor 120 may identify a portion of the offset information corresponding to the relative movement. The processor 120 may identify a portion of the offset information corresponding to a change in physical quantity according to the relative movement.

In an embodiment, the processor 120 may identify the barometric pressure based on the identified offset information. The processor 120 may identify the barometric pressure based on the identified portion of the offset information. For example, the processor 120 may identify the barometric pressure based on the obtained data and offset information.

In an embodiment, the processor 120 may adjust the obtained data based on the offset information. The processor 120 may identify the barometric pressure based on the adjusted data. Herein, the offset information may represent a value of the same type (or same dimension) as the obtained data. For example, the offset information and the obtained data may represent a resistance value. For example, the processor 120 may adjust the resistance value represented by the obtained data based on the offset information. The processor 120 may identify the barometric pressure based on the adjusted resistance value. However, it is not limited thereto.

In an embodiment, the processor 120 may identify the initial barometric pressure based on the obtained data. The processor 120 may identify the barometric pressure by adjusting the initial barometric pressure based on the offset information. Herein, the offset information may represent barometric pressure. For example, the processor 120 may identify the barometric pressure by adjusting the initial barometric pressure identified based on the obtained data based on the barometric pressure represented by the offset information. However, it is not limited thereto.

In operation 1030, the processor 120 may identify barometric pressure that is not related to the offset.

In an embodiment, the processor 120 may bypass (or detour or stop) adjusting the obtained data based on the offset information. For example, the processor 120 may bypass (or detour or stop) identifying the offset information.

In an embodiment, the processor 120 may identify the barometric pressure based on the obtained data.

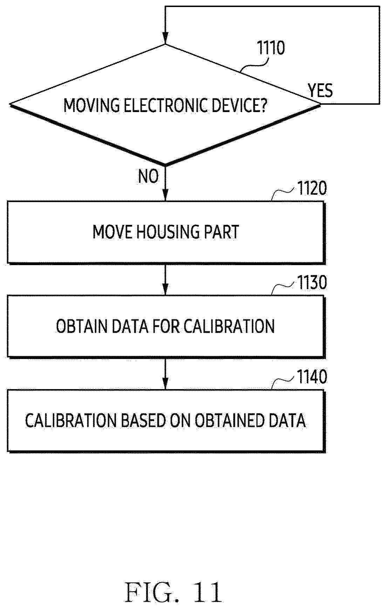

FIG. 11 is a flowchart illustrating a method performed in an electronic device.

For description of FIG. 11, components of an electronic device 101 and a structure of the electronic device 101 described with reference to FIGS. 1, 2A, 2B, 2C, 2D, 3A, 3B, 4A, 4B, and 5 may be referred to.

FIG. 11 may be performed after the electronic device 101 determines calibration.

Referring to FIG. 11, in operation 1110, a processor 120 may identify a movement of the electronic device 101. For example, the processor 120 may identify a motion (or movement) of the electronic device 101 based on the motion sensor. In addition, for example, the processor 120 may identify whether the motion (or movement) of the electronic device 101 is below a reference movement range. Movement may be a movement of the entire electronic device with respect to ground.

In operation 1110, in case that the movement of the electronic device 101 is identified ('yes'), the processor 120 may perform operation 1110 again. In operation 1120, in case that the movement of the electronic device 101 is not identified ('no'), the processor 120 may perform operation 1120. In addition, in operation 1110, in case that the movement of the electronic device 101 exceeds the reference movement range ('yes'), the processor 120 may perform operation 1110 again. In operation 1120, in case that the movement of the electronic device 101 is not below the reference movement range ('no'), the processor 120 may perform operation 1120.

In operation 1120, the processor 120 may move a housing part (e.g., the first housing part 210 or the second housing part 220). The processor 120 may relatively move the housing part. The processor 120 may cause the relative movement between the first housing part 210 and the second housing part 220. The processor 120 may cause the relative movement between the first housing part 210 and the second housing part 220 while the motion (or movement) of the electronic device 101 is below the reference movement range. For example, the processor 120 may cause the relative movement between the first housing part 210 and the second housing part 220 based on control information for driving the motor 361.

In an embodiment, the processor 120 may cause the relative movement of the second housing part 220 with respect to the first housing part 210 at least twice. For example, the processor 120 may relatively move the second housing part 220 so that the housing has a state (e.g., the second state) different from the current state (e.g., the first state). Thereafter, the processor 120 may relatively move the second housing part 220 so that the housing has a previous state (e.g., the first state) from the different state (e.g., the second state).

In operation 1130, the processor 120 may obtain data for calibration. The processor 120 may obtain data for identifying the barometric pressure while relatively moving the second housing part 220 with respect to the first housing part 210. The processor 120 may obtain first data for identifying the barometric pressure while relatively moving the second housing part 220 so that the housing has a state (e.g., the second state) different from the current state (e.g., the first state). In addition, the processor 120 may obtain second data for identifying the barometric pressure during the relative movement for the previous state while relatively moving the second housing part 220 so that the housing has the previous state (e.g., the first state) from the different state (e.g., the second state).

In operation 1140, the processor 120 may perform calibration based on the obtained data. The processor 120 may update the offset information based on data obtained during the relative movement. For example, the processor 120 may update the offset information based on the first data and the second data.

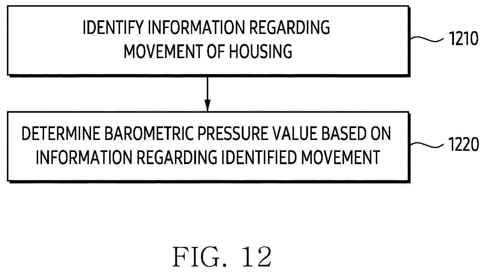

FIG. 12 is a flowchart illustrating a method performed in an electronic device.

For description of FIG. 12, components of an electronic device 101 and a structure of the electronic device 101 described with reference to FIGS. 1, 2A, 2B, 2C, 2D, 3A, 3B, 4A, 4B, and 5 may be referred to.

Referring to FIG. 12, in operation 1210, a processor 120 may identify information regarding a movement of a housing. The processor 120 may identify information regarding the movement of the housing. The information regarding the movement of the housing may include information regarding a state of the electronic device 101. For example, the information regarding the movement of the housing may include information representing whether the electronic device 101 is in a first state, a second state, or an intermediate state. The information regarding the movement of the housing may include information for identifying a physical quantity (e.g., movement speed, acceleration, movement displacement, movement amount) related to the electronic device 101.

In an embodiment, the information regarding the movement of the housing may include information related to the motor 361. For example, the information related to the motor 361 may include control information on the motor 361 and/or response information on the control information from the motor 361. However, it is not limited thereto. For example, the processor 120 may identify information regarding the movement of the housing obtained via the sensor 520. For example, the information regarding the movement of the housing may include information obtained from a motion sensor. For example, the information regarding the movement of the housing may be obtained via a proximity sensor and/or a distance sensor for identifying a relative movement between a first housing part 210 and a second housing part 220.

In operation 1220, the processor 120 may determine a barometric pressure value based on information regarding the identified movement. For example, the processor 120 may determine the barometric pressure value based on the relative movement between the first housing part 210 and the second housing part 220 identified by the information regarding the identified movement. For example, based on the information regarding the relative movement, the processor 120 may determine the barometric pressure value may be determined in response to the relative movement.

In an embodiment, the processor 120 may determine the barometric pressure value based on data obtained by a barometric pressure sensor 510 in response to no relative movement being detected based on the information regarding the relative movement.

In an embodiment, the processor 120 may determine the barometric pressure value based on an offset value corresponding to the information regarding the relative movement among a plurality of offset values in response to the relative movement being detected based on the information regarding the relative movement. The processor 120 may determine the barometric pressure value based on an offset value corresponding to a change in the physical quantity according to the relative movement among the plurality of offset values. For example, the processor 120 may determine the barometric pressure value based on an offset value corresponding to amounts of the relative movement among the plurality of offset values. For example, the processor 120 may determine the barometric pressure value based on the offset value corresponding to the information on the relative movement among the plurality of offset values and data obtained by the barometric pressure sensor 510.

In an embodiment, the processor 120 may determine the barometric pressure value obtained before the relative movement of the second housing part 220 with respect to the first housing part 210 as the barometric pressure value during the relative movement, in response to the relative movement being detected, based on the information regarding the relative movement. Based on the information regarding the relative movement, the processor 120 may determine a barometric pressure value based on data obtained via the sensor 520 as the barometric pressure value during the relative movement, in response to the relative movement being detected. For example, based on the information regarding the relative movement, the processor 120 may determine a barometric pressure value obtained from an external electronic device 102 as the barometric pressure value during the relative movement, in response to the relative movement being detected.

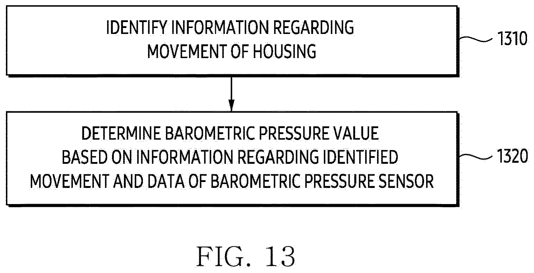

FIG. 13 is a flowchart illustrating a method performed in an electronic device.

For description of FIG. 13, components of an electronic device 101 and a structure of the electronic device 101 described with reference to FIGS. 1, 2A, 2B, 2C, 2D, 3A, 3B, 4A, 4B, and 5 may be referred to.

Referring to FIG. 13, in operation 1310, a processor 120 may identify information regarding a movement of a housing. The processor 120 may identify information regarding the movement of the housing. The information on the movement of the housing may include information regarding a state of the electronic device 101. For example, the information regarding the movement of the housing may include information representing whether the electronic device 101 is in a first state, a second state, or an intermediate state. The information regarding the movement of the housing may include information for identifying a physical quantity (e.g., movement speed, acceleration, movement displacement, movement amount) related to the electronic device 101.

In operation 1320, the processor 120 may determine a barometric pressure value based on information regarding the identified movement and data of a barometric pressure sensor 510. For example, the processor 120 may determine the barometric pressure value based on the relative movement between the first housing part 210 and the second housing part 220 identified by the information regarding the identified movement. For example, based on the information on the relative movement, the processor 120 may determine the barometric pressure value may be determined in response to the relative movement.

In an embodiment, the processor 120 may determine the barometric pressure value based on data obtained by the barometric pressure sensor 510 in response to no relative movement being detected based on the information regarding the relative movement.

In an embodiment, the processor 120 may determine the barometric pressure value based on an offset value corresponding to the information regarding the relative movement among a plurality of offset values in response to the relative movement being detected based on the information regarding the relative movement. The processor 120 may determine the barometric pressure value based on an offset value corresponding to a change in the physical quantity according to the relative movement among the plurality of offset values. For example, the processor 120 may determine the barometric pressure value based on an offset value corresponding to amounts of the relative movement among the plurality of offset values. For example, the processor 120 may determine the barometric pressure value based on the offset value corresponding to the information regarding the relative movement among the plurality of offset values and data obtained by the barometric pressure sensor 510.

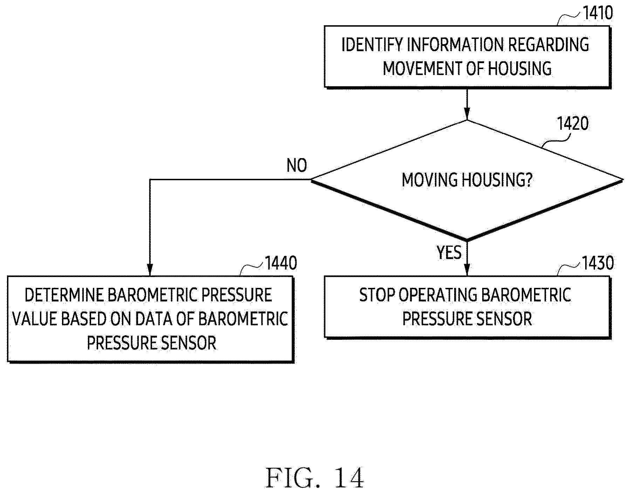

FIG. 14 is a flowchart illustrating a method performed in an electronic device.

For description of FIG. 14, components of an electronic device 101 and a structure of the electronic device 101 described with reference to FIGS. 1, 2A, 2B, 2C, 2D, 3A, 3B, 4A, 4B, and 5 may be referred to.

Referring to FIG. 14, in operation 1410, a processor 120 may identify information regarding a movement of a housing. The processor 120 may identify the information regarding the movement of the housing. The information regarding the movement of the housing may include information regarding a state of the electronic device 101. For example, the information regarding the movement of the housing may include information representing whether the electronic device 101 is in a first state, a second state, or an intermediate state. The information regarding the movement of the housing may include information for identifying a physical quantity (e.g., movement speed, acceleration, movement displacement, movement amount) related to the electronic device 101.

In operation 1420, the processor 120 may determine whether the housing is moving.

In operation 1420, the processor 120 may perform operation 1430 in response to the determining that the housing is moving ('yes'). In operation 1420, the processor 120 may perform operation 1440 in response to the determining that the housing is not moved ('no').

In operation 1430, the processor 120 may stop an operation of a barometric pressure sensor 510. For example, the processor 120 may take action against the barometric pressure sensor 510 so that the barometric pressure sensor 510 stops outputting data, as for instance described previously. For example, the processor 120 may turn off the barometric pressure sensor 510. For example, the processor 120 may switch the barometric pressure sensor 510 to a standby state.

In an embodiment, while stopping the operation of the barometric pressure sensor 510, the processor 120 may determine the barometric pressure value obtained before a relative movement of the second housing part 220 with respect to the first housing part 210 as the barometric pressure value during the relative movement. Herein, before the relative movement of the second housing part 220 with respect to the first housing part 210 may be a timing before a reference time from a timing when the movement began. Herein, before the relative movement of the second housing part 220 with respect to the first housing part 210 may include a time range set from the timing before the reference time.

In an embodiment, while stopping the operation of the barometric pressure sensor 510, the processor 120 may determine a barometric pressure value based on data obtained via the sensor 520 as the barometric pressure value during the relative movement. For example, the processor 120 may obtain data representing a change in the physical quantity via the sensor 520. For example, the processor 120 may calculate the barometric pressure value based on data representing the change in the physical quantity.

In an embodiment, while stopping the operation of the barometric pressure sensor 510, the processor 120 may determine a barometric pressure value obtained from an external electronic device 102 as the barometric pressure value during the relative movement. For example, the processor 120 may receive data from the external electronic device 102 via a communication circuitry (e.g., the communication module 190 of FIG. 1). Herein, the data from the external electronic device 102 may be related to a barometric pressure value obtained from the external electronic device 102. For example, the data from the external electronic device 102 may represent the barometric pressure value obtained from the external electronic device 102.

In an embodiment, while stopping the operation of the barometric pressure sensor 510, the processor 120 may determine a barometric pressure value obtained via a component other than the barometric pressure sensor 510 as the barometric pressure value during the relative movement. During the relative movement, the processor 120 may determine a value obtained by adding a predetermined fluctuation value to a barometric pressure value obtained without relying on the barometric pressure sensor 510 as the barometric pressure value during the relative movement.

In operation 1440, the processor 120 may determine the barometric pressure value based on data of the barometric pressure sensor 510. For example, the processor 120 may determine the barometric pressure value based on data obtained by the barometric pressure sensor 510 in response to no relative movement being detected based on information regarding the relative movement.

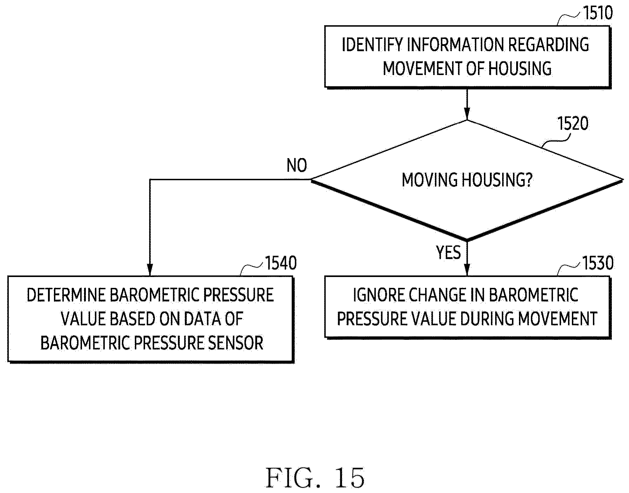

FIG. 15 is a flowchart illustrating a method performed in an electronic device.

For description of FIG. 15, components of an electronic device 101 and a structure of the electronic device 101 described with reference to FIGS. 1, 2A, 2B, 2C, 2D, 3A, 3B, 4A, 4B, and 5 may be referred to.

Referring to FIG. 15, in operation 1510, a processor 120 may identify information regarding a movement of a housing. The processor 120 may identify the information regarding the movement of the housing. The information regarding the movement of the housing may include information regarding a state of the electronic device 101. For example, the information regarding the movement of the housing may include information representing whether the electronic device 101 is in a first state, a second state, or an intermediate state. The information regarding the movement of the housing may include information for identifying a physical quantity (e.g., movement speed, acceleration, movement displacement, movement amount) related to the electronic device 101.

In operation 1520, the processor 120 may determine whether the housing is moving.

In operation 1520, the processor 120 may perform operation 1530 in response to the determining that the housing is moving ('yes'). In operation 1520, the processor 120 may perform operation 1540 in response to the determining that the housing is not moved ('no').

In operation 1530, the processor 120 may ignore a change in a barometric pressure value during a movement. The processor 120 may ignore the change in the barometric pressure value represented by the data obtained via a barometric pressure sensor 510 during the movement. For example, the fact that the processor 120 ignores the change in the barometric pressure value of the barometric pressure sensor 510 during the movement may mean that the processor 120 does not rely on the barometric pressure sensor 510. The fact that the processor 120 ignores data outputted by the barometric pressure sensor 510 may mean that it ignores fluctuation in the barometric pressure value that changes during a relative movement. The fluctuation in the barometric pressure value that changes during the relative movement may mean a fluctuation from the barometric pressure value before the relative movement. For example, ignoring the fluctuation in the barometric pressure value that changes during the relative movement may mean ignoring the increase in the barometric pressure value with respect to the value before movement among the barometric pressure values, based on data obtained by the barometric pressure sensor 510 as it moves from the second state to the first state. For example, ignoring the fluctuation in the barometric pressure value that changes during the relative movement may mean ignoring the decrease in the barometric pressure value before movement among the barometric pressure values based on the data obtained by the barometric pressure sensor 510 as it moves from the first state to the second state.

In an embodiment, while stopping the operation of the barometric pressure sensor 510, the processor 120 may determine the barometric pressure value obtained before a relative movement of the second housing part 220 with respect to the first housing part 210 as the barometric pressure value during the relative movement. Herein, before the relative movement of the second housing part 220 with respect to the first housing part 210 may be a timing before a reference time from a timing when the movement began. Herein, before the relative movement of the second housing part 220 with respect to the first housing part 210 may include a time range set from the timing before the reference time.

In an embodiment, while ignoring the barometric pressure sensor 510, the processor 120 may determine a barometric pressure value based on data obtained via a sensor 520 as the barometric pressure value during the relative movement. This may be a barometric pressure value obtained before movement of the housing. For example, the processor 120 may obtain data representing the change in the physical quantity via the sensor 520. For example, the processor 120 may calculate the barometric pressure value based on data representing the change in the physical quantity.

In an embodiment, while ignoring the barometric pressure sensor 510, the processor 120 may determine a barometric pressure value obtained from an external electronic device 102 as the barometric pressure value during the relative movement. For example, the processor 120 may receive data from the external electronic device 102 via a communication circuitry (e.g., the communication module 190 of FIG. 1). Herein, the data from the external electronic device 102 may be related to the barometric pressure value obtained from the external electronic device 102. For example, the data from the external electronic device 102 may represent a barometric pressure value obtained from the external electronic device 102.

In an embodiment, while ignoring the barometric pressure sensor 510, the processor 120 may determine a barometric pressure value obtained without relying on the barometric pressure sensor 510 as the barometric pressure value during the relative movement. During the relative movement, the processor 120 may determine a value obtained by adding a predetermined fluctuation value to the barometric pressure value obtained without relying on the barometric pressure sensor 510 as the barometric pressure value during the relative movement.

In operation 1540, the processor 120 may determine the barometric pressure value based on data of the barometric pressure sensor 510. For example, the processor 120 may determine the barometric pressure value based on data obtained by the barometric pressure sensor 510 in response to no relative movement being detected based on information regarding the relative movement.

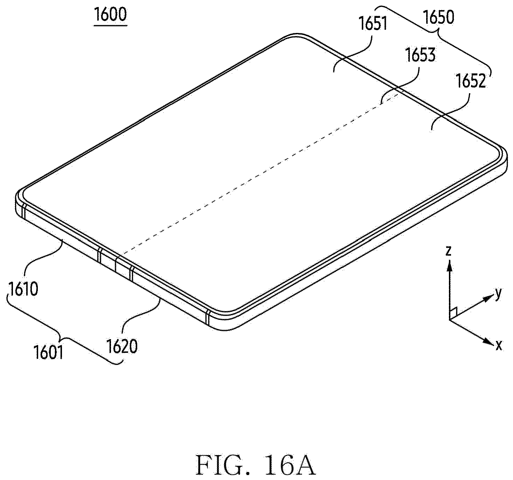

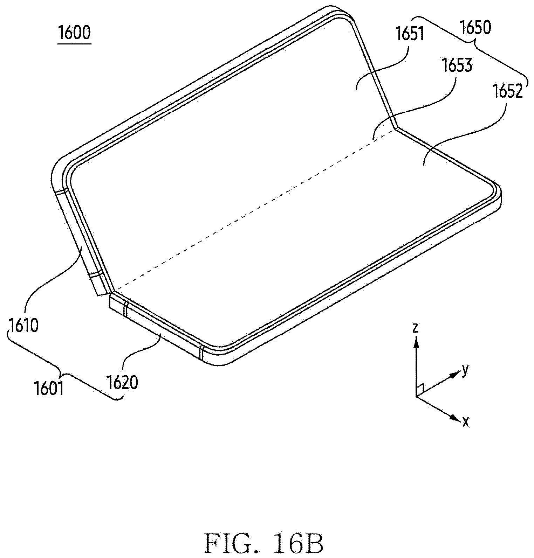

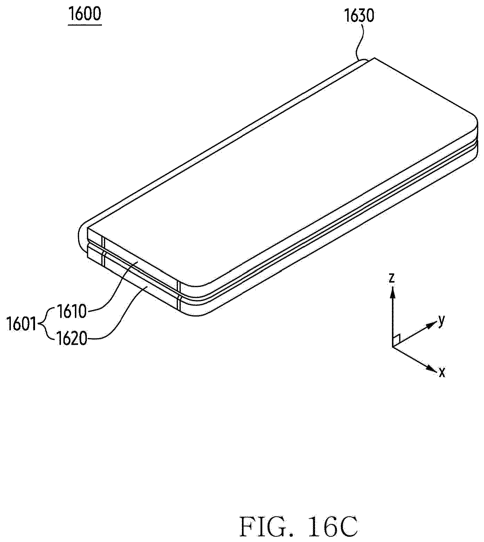

FIG. 16A is a perspective view illustrating an example of a fully unfolding status of an electronic device. FIG. 16B is a perspective view illustrating an example of an intermediate status in which an electronic device is partially unfolded. FIG. 16C is a perspective view illustrating an example of a fully folded status of an electronic device.

An electronic device 1600 is an example of the electronic device 101 shown in FIG. 1, and may be a foldable (or bendable) electronic device.

In drawings of FIGS. 16A, 16B, and 16C, a spatial coordinate system defined as an X-axis, a Y-axis, and a Z-axis that are orthogonal to each other is illustrated. Herein, the X-axis may indicate a width direction of the electronic device 1600, the Y-axis may indicate a longitudinal direction of the electronic device 1600, and the Z-axis may indicate a height (or thickness) direction of the electronic device 1600. In the following description, the term 'first direction' may mean a direction parallel to the Z-axis.

Referring to FIGS. 16A, 16B, and 16C, the electronic device 1600 may include a foldable housing 1601 and a flexible (or foldable) display 1650 (hereinafter, shortened to 'display 1650') (e.g., a display module 160 of FIG. 1) disposed within a space formed by the foldable housing 1601. According to an embodiment, a surface on which the display 1650 is disposed (or a surface on which the display 1650 is seen from the outside of the electronic device 1600) may be defined as a front surface of the electronic device 1600. In addition, an opposite surface of the front surface may be defined as a rear surface of the electronic device 1600. Furthermore, a surface surrounding a space between the front surface and the rear surface may be defined as a side surface of the electronic device 1600.

In an embodiment, the foldable housing 1601 may include a first housing part 1610, a second housing part 1620, and a hinge part 1630.

In an embodiment, the first housing part 1610 may be connected to the hinge part 1630, and may include a first surface facing in a first direction and a second surface facing in a second direction opposite to the first direction. The second housing part 1620 may be connected to the hinge part 1630, and may include a third surface facing in a third direction and a fourth surface facing in a fourth direction opposite to the third direction. The second housing part 1620 may be rotated with respect to the first housing part 1610 based on the hinge part 1630. The electronic device 1600 may be changed to a folded state or an unfolded state.

In an embodiment, the display 1650 may mean a display in which at least a portion of an area may be deformed to a planar surface or a curved surface. In an embodiment, the display 1650 may include a folding area 1653, a first area 1651 disposed on a side and a second area 1652 disposed on another side based on the folding area 1653.

In an embodiment, when the electronic device 1600 is unfolded (e.g., FIG. 16A), the first housing part 1610 and the second housing part 1620 may be arranged to form an angle of 180 degrees and face the same direction. A surface of the first area 1651 and a surface of the second area 1652 of the display 1650 may form 180 degrees with each other, and may face the same direction (e.g., a front direction of the electronic device). The folding area 1653 may form the same plane as the first area 1651 and the second area 1652.

In an embodiment, when the electronic device 1600 is in a folded state (e.g., FIG. 16C), the first housing part 1610 and the second housing part 1620 may be disposed to face each other. A surface of the first area 1651 and a surface of the second area 1652 of the display 1650 may form a narrow angle (e.g., between 0 and 10 degrees) with each other, and may face each other. At least a portion of the folding area 1653 may be formed of a curved surface with a certain curvature.

In an embodiment, when the electronic device 1600 is in an intermediate state (e.g., FIG. 16B), the first housing part 1610 and the second housing part 1620 may be disposed at a certain angle to each other. A surface of the first area 1651 and a surface of the second area 1652 of the display 1650 may form an angle greater than a folded state and smaller than an unfolded state. At least a portion of the folding area 1653 may be formed of a curved surface with a certain curvature, and in this case, the curvature may be smaller than that in the folded state.

According to one embodiment, when viewed from a folding axis direction, the electronic device 1600 may be folded in two ways: 'in-folding' in which a front surface of the electronic device 1600 is folded to forms an acute angle, and 'out-folding' in which a front surface of the electronic device 1600 is folded to form an obtuse angle. For example, a first surface of the first housing part 1610 may face a third surface of the second housing part 1620 in a state that the electronic device is folded in the in-folding type, and the first surface of the first housing part 1610 and the third surface of the second housing part 1620 may face the same direction (e.g., a direction parallel to the Z-axis) in a state of being fully unfolded.

For another example, in a state that the electronic device 1600 is folded in the out-folding type, a second surface of the first housing part 1610 may face a fourth surface of the second housing part 1620.

In addition, although not shown in the drawing, the electronic device 1600 may include a plurality of hinge axes, and in this case, the electronic device 1600 may be folded in a 'multi-folding' type that combines the in-folding type and out-folding type.

The in-folding type may mean a state in which the display 1650 is not exposed to the outside in a fully folded state. The out folding type may mean a state in which the display 1650 is exposed to the outside in a fully folded state. FIG. 16B illustrates an intermediate state in which the electronic device 1600 is partially unfolded during the in-folding process.

The electronic device 1600 may obtain data for identifying barometric pressure via a barometric pressure sensor (e.g., the barometric pressure sensor 510).

In embodiments, the relative movement of housing parts with respect to each other as discussed previously in this disclosure may be a folding operation of a first housing part 1610 with respect to a second housing part 1620. Therefore, the disclosure of the embodiments described with reference to Figs. 1-15 also apply to embodiments in which housing parts are folded, as for instance shown in Figs. 16a-16c.

The electronic device 1600 may obtain offset information in response to identifying a relative movement of the second housing part 1620 with respect to the first housing part 1610. The electronic device 1600 may obtain offset information based on a speed or angular velocity of the relative movement of the second housing part 1620 with respect to the first housing part 1610. The electronic device 1600 may identify barometric pressure based on the identified offset information. The electronic device 1600 may identify barometric pressure based on the identified offset information and obtained data.

The electronic device 1600 may determine whether to update the offset information based on the obtained data and the offset information.

An electronic device 101 and 1600 as described above may comprise a housing comprising a first housing part 210 and 1610 and a second housing part 220 and 1620 movably arranged with respect to the first housing part 210 and 1610. According to an embodiment, the electronic device 101 and 1600 may comprise a flexible display 230 disposed on the housing. According to an embodiment, the electronic device 101 and 1600 may comprise one or more barometric pressure sensors 510. According to an embodiment, the electronic device 101 and 1600 may comprise at least one processor 120 including processing circuitry. According to an embodiment, the electronic device 101 and 1600 may comprise a memory 130 including one or more storage mediums storing instructions. According to an embodiment, the instructions that, when executed by the at least one processor 120 individually or collectively, may cause the electronic device 101 and 1600 to identify information regarding relative movement of the second housing part 220 and 1620 with respect to the first housing part 210 and 1610. According to an embodiment, the instructions that, when executed by the at least one processor 120 individually or collectively, may cause the electronic device 101 and 1600 to determine a barometric pressure value based on data obtained from the one or more barometric pressure sensors 510 and the identified information regarding the relative movement.

According to an embodiment, the memory 130 may store offset values corresponding to amounts of the relative movement that occurs between the first housing part 210 and 1610 and the second housing part 220 and 1620. According to an embodiment, the instructions that, when executed by the at least one processor 120 individually or collectively, may cause the electronic device 101 and 1600 to adjust the barometric pressure value determined based on the data obtained from the one or more barometric pressure sensors 510 using one of the offset values corresponding to the identified relative movement.

According to an embodiment, the instructions that, when executed by the at least one processor 120 individually or collectively, may cause the electronic device 101 and 1600 to adjust the obtained data using one of the offset values corresponding to the identified relative movement. According to an embodiment, the instructions that, when executed by the at least one processor 120 individually or collectively, may cause the electronic device 101 and 1600 to determine the barometric pressure value based on the adjusted data.

According to an embodiment, the instructions that, when executed by the at least one processor 120 individually or collectively, may cause the electronic device 101 and 1600 to determine whether to adjust at least one of the offset values based on the data obtained from the one or more barometric pressure sensors 510.

According to an embodiment, the instructions that, when executed by the at least one processor 120 individually or collectively, may cause the electronic device 101 and 1600 to obtain other data from the one or more barometric pressure sensors 510 during the relative movement in response to determining to adjust the at least one of the offset values. According to an embodiment, the instructions that, when executed by the at least one processor 120 individually or collectively, may cause the electronic device 101 and 1600 to adjust the at least one of the offset values corresponding to the other data based on the other data.

According to an embodiment, the electronic device 101 and 1600 may comprise at least one motor 361 for moving the second housing part 220 and 1620 relative to the first housing part 210 and 1610. According to an embodiment, the electronic device 101 and 1600 may comprise at least one motion sensor. According to an embodiment, the instructions that, when executed by the at least one processor 120 individually or collectively, may cause the electronic device 101 and 1600 to determine at least one value based on data obtained from the at least one motion sensor. According to an embodiment, the at least one value may be related to movement of the electronic device 101 and 1600. According to an embodiment, the instructions that, when executed by the at least one processor 120 individually or collectively, may cause the electronic device 101 and 1600 to move the second housing part 220 and 1620 relative to the first housing part 210 and 1610 using the at least one motor 361, while the movement of the electronic device 101 and 1600 is within a reference movement range, in response to determining to adjust the at least one of the offset values. According to an embodiment, the instructions that, when executed by the at least one processor 120 individually or collectively, may cause the electronic device 101 and 1600 to obtain the other data obtained from the one or more barometric pressure sensors 510 during the relative movement. However, the motor 361 is an embodiment, and the present invention is not limited to the embodiment, and a case without the motor 361 may also be included.

According to an embodiment, the electronic device 101 and 1600 may further comprise at least one communication circuitry. According to an embodiment, the instructions that, when executed by the at least one processor 120 individually or collectively, may cause the electronic device 101 and 1600 to receive other data from an external electronic device 102 via the at least one communication circuitry. According to an embodiment, the instructions that, when executed by the at least one processor 120 individually or collectively, may cause the electronic device 101 and 1600 to adjust the at least one of the offset values corresponding to the other data based on the other data.

According to an embodiment, a first barometric pressure value represented by the data obtained from the one or more barometric pressure sensors 510 may be temporarily increased while the second housing part 220 and 1620 moves toward the first housing part 210 and 1610. According to an embodiment, a second barometric pressure value represented by the data obtained from the one or more barometric pressure sensors 510 may be temporarily decreased while the second housing part 220 and 1620 moves away from the first housing part 210 and 1610.

According to an embodiment, the first barometric pressure value may be temporarily increased above the ambient barometric pressure value outside the electronic device 101 and 1600. According to an embodiment, the second barometric pressure value may be temporarily decreased below the ambient barometric pressure value.

According to an embodiment, the electronic device 101 and 1600 may comprise at least one motor 361 for moving the second housing part 220 and 1620 relative to the first housing part 210 and 1610. According to an embodiment, the information regarding the relative movement includes control information for driving the at least one motor 361 to move the second housing part 220 and 1620 relative to the first housing part 210 and 1610.

According to an embodiment, the electronic device 101 and 1600 may further comprise at least one communication circuitry. According to an embodiment, the instructions that, when executed by the at least one processor 120 individually or collectively, may cause the electronic device 101 and 1600 to receive other data from an external electronic device 102 via the at least one communication circuitry. According to an embodiment, the other data may be related to another barometric pressure value obtained from the external electronic device 102. The instructions that, when executed by the at least one processor 120 individually or collectively, may cause the electronic device 101 and 1600 to determine the barometric pressure value based on the data obtained from the one or more barometric pressure sensors 510 and the other data obtained from the external electronic device 102 in response to the information regarding the relative movement.

According to an embodiment, the instructions that, when executed by the at least one processor 120 individually or collectively, may cause the electronic device 101 and 1600 to display, on the flexible display 230, a screen containing the barometric pressure value different from original barometric pressure value indicated by the data obtained by the at least one barometric pressure sensor 510 during the relative movement.

The instructions that, when executed by the at least one processor 120 individually or collectively, may cause the electronic device 101 and 1600 to display, on the flexible display 230, a screen containing an altitude value based on the barometric pressure value that is different from original barometric pressure value indicated by the data obtained by the at least one barometric pressure sensor 510 during the relative movement.

A method as described above may be performed in an electronic device 101 and 1600 comprising a housing comprising a first housing part 210 and 1610 and a second housing part 220 and 1620 movably arranged with respect to the first housing part 210 and 1610, a flexible display 230 disposed on the housing, and one or more barometric pressure sensors 510. According to an embodiment, the method may comprise identifying information regarding a relative movement of the second housing part 220 and 1620 with respect to the first housing part 210 and 1610. According to an embodiment, the method may comprise determining a barometric pressure value based on data obtained from the one or more barometric pressure sensors 510 and the identified information regarding the relative movement.

A non-transitory computer readable storage medium as described above may store one or more programs 140. According to an embodiment, the one or more programs 140 may include instructions that, when executed by at least one processor 120 of an electronic device 101 and 1600 comprising a housing comprising a first housing part 210 and 1610 and a second housing part 220 and 1620 movably arranged with respect to the first housing part 210 and 1610, a flexible display 230 disposed on the housing, and one or more barometric pressure sensors 510, individually or collectively, cause the electronic device 101 and 1600 to identify information regarding a relative movement of the second housing part 220 and 1620 with respect to the first housing part 210 and 1610. According to an embodiment, the one or more programs 140 may include instructions that, when executed by at least one processor 120 of an electronic device 101 and 1600 individually or collectively, cause the electronic device 101 and 1600 to determine a barometric pressure value based on data obtained from the one or more barometric pressure sensors 510 and the identified information regarding the relative movement.

An electronic device 101 and 1600 as described above may comprise a housing comprising a first housing part 210 and 1610 and a second housing part 220 and 1620 movably arranged with respect to the first housing part 210 and 1610. According to an embodiment, the electronic device 101 and 1600 may comprise a flexible display 230 disposed on the housing. According to an embodiment, the electronic device 101 and 1600 may comprise one or more barometric pressure sensors 510. According to an embodiment, the electronic device 101 and 1600 may comprise at least one processor 120 including processing circuitry. According to an embodiment, the electronic device 101 and 1600 may comprise a memory 130 including one or more storage mediums storing instructions. According to an embodiment, the instructions that, when executed by the at least one processor 120 individually or collectively, may cause the electronic device 101 and 1600 to determine a barometric pressure value based on data obtained from the at least one barometric pressure sensor 510. According to an embodiment, the instructions that, when executed by the at least one processor 120 individually or collectively, may cause the electronic device 101 and 1600 to ignore changes in the determined barometric pressure value while the second housing part 220 and 1620 is moving relative to the first housing part 210 and 1610.

According to an embodiment, a first barometric pressure value represented by the data obtained from the one or more barometric pressure sensors 510 may be temporarily increased while the second housing part 220 and 1620 moves toward the first housing part 210 and 1610. According to an embodiment, a second barometric pressure value represented by the data obtained from the one or more barometric pressure sensors 510 may be temporarily decreased while the second housing part 220 and 1620 moves away from the first housing part 210 and 1610.

According to an embodiment, the first barometric pressure value may be temporarily increased above the ambient barometric pressure value outside the electronic device 101 and 1600. According to an embodiment, the second barometric pressure value may be temporarily decreased below the ambient barometric pressure value.

According to an embodiment, the instructions that, when executed by the at least one processor 120 individually or collectively, may cause the electronic device 101 and 1600 to determine the barometric pressure value obtained before the relative movement of the second housing part 220 and 1620 with respect to the first housing part 210 and 1610 as the barometric pressure value during the relative movement.

According to an embodiment, the instructions that, when executed by the at least one processor 120 individually or collectively, may cause the electronic device 101 to display, on the flexible display 230, a screen containing an altitude value based on the barometric pressure value obtained before the relative movement during the relative movement.

According to an embodiment, the electronic device 101 and 1600 may further comprise at least one communication circuitry. According to an embodiment, the instructions that, when executed by the at least one processor 120 individually or collectively, may cause the electronic device 101 and 1600 to receive other data from an external electronic device 102 via the at least one communication circuitry. According to an embodiment, the other data may be related to another barometric pressure value obtained from the external electronic device 102. According to an embodiment, the instructions that, when executed by the at least one processor 120 individually or collectively, may cause the electronic device 101 and 1600 to identify information regarding a relative movement of the second housing part 220 and 1620 with respect to the first housing part 210 and 1610. According to an embodiment, the instructions that, when executed by the at least one processor 120 individually or collectively, may cause the electronic device 101 and 1600 to determine the other barometric pressure value based on the other data as the barometric pressure value during the relative movement.

A method as described above may be performed in an electronic device 101 and 1600 comprising a housing comprising a first housing part 210 and 1610 and a second housing part 220 and 1620 movably arranged with respect to the first housing part 210 and 1610, a flexible display 230 disposed on the housing, and one or more barometric pressure sensors 510. According to an embodiment, the method may comprise determining a barometric pressure value based on data obtained from the at least one barometric pressure sensor 510. According to an embodiment, the method may comprise ignoring changes in the determined barometric pressure value while the second housing part 220 and 1620 is moving relative to the first housing part 210 and 1610.

A non-transitory computer readable storage medium as described above may store one or more programs 140. According to an embodiment, the one or more programs 140 may include instructions that, when executed by at least one processor 120 including processing circuitry of an electronic device 101 and 1600 comprising a housing comprising a first housing part 210 and 1610 and a second housing part 220 and 1620 movably arranged with respect to the first housing part 210 and 1610, a flexible display 230 disposed on the housing, and one or more barometric pressure sensors 510, individually or collectively, cause the electronic device 101 and 1600 to determine a barometric pressure value based on data obtained from the at least one barometric pressure sensor 510. According to an embodiment, the one or more programs 140 may include instructions that, when executed by at least one processor 120 of the electronic device 101 and 1600 individually or collectively, cause the electronic device 101 and 1600 to at least ignore changes in the obtained data or changes in the determined barometric pressure value while the second housing part 220 and 1620 is moving relative to the first housing part 210 and 1610.

An electronic device 101 and 1600 as described above may comprise a housing comprising a first housing part 210 and 1610 and a second housing part 220 and 1620 movably arranged with respect to the first housing part 210 and 1610. According to an embodiment, the electronic device 101 and 1600 may comprise a flexible display 230 disposed on the housing. According to an embodiment, the electronic device 101 and 1600 may comprise one or more barometric pressure sensors 510. According to an embodiment, the electronic device 101 and 1600 may comprise at least one processor 120 including processing circuitry. According to an embodiment, the electronic device 101 and 1600 may comprise a memory 130 including one or more storage mediums storing instructions. According to an embodiment, the instructions that, when executed by the at least one processor 120 individually or collectively, may cause the electronic device 101 and 1600 to determine a barometric pressure value based on data obtained from the at least one barometric pressure sensor 510. According to an embodiment, the instructions that, when executed by the at least one processor 120 individually or collectively, may cause the electronic device 101 and 1600 to stop operation of the at least one barometric pressure sensor 510 while the second housing part 220 and 1620 is moving relative to the first housing part 210 and 1610.

A method as described above may be performed in an electronic device 101 and 1600 comprising a housing comprising a first housing part 210 and 1610 and a second housing part 220 and 1620 movably arranged with respect to the first housing part 210 and 1610, a flexible display 230 disposed on the housing, and one or more barometric pressure sensors 510. According to an embodiment, the method may comprise determining a barometric pressure value based on data obtained from the at least one barometric pressure sensor 510. According to an embodiment, the method may comprise stopping operation of the at least one barometric pressure sensor 510 while the second housing part 220 and 1620 is moving relative to the first housing part 210 and 1610.

A non-transitory computer readable storage medium as described above may store one or more programs 140. According to an embodiment, the one or more programs 140 may include instructions that, when executed by at least one processor 120 of an electronic device 101 and 1600 comprising a housing comprising a first housing part 210 and 1610 and a second housing part 220 and 1620 movably arranged with respect to the first housing part 210 and 1610, a flexible display 230 disposed on the housing, and one or more barometric pressure sensors 510, individually or collectively, cause the electronic device 101 and 1600 to determine a barometric pressure value based on data obtained from the at least one barometric pressure sensor 510. According to an embodiment, the one or more programs 140 may include instructions that, when executed by at least one processor 120 including processing circuitry individually or collectively, cause the electronic device 101 and 1600 to stop operation of the at least one barometric pressure sensor 510 while the second housing part 220 and 1620 is moving relative to the first housing part 210 and 1610.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a housing comprising a first housing part (210, 1610) and a second housing part (220, 1620) movably arranged with respect to the first housing part (210, 1610),
a flexible display (230, 1650) disposed on the housing,
one or more barometric pressure sensors (520),
at least one processor (120) including processing circuitry; and
memory (130) including one or more storage mediums storing instructions, wherein the instructions that, when executed by the at least one processor (120) individually or collectively, cause the electronic device to:
identify information regarding relative movement of the second housing part (220, 1620) with respect to the first housing part (210, 1610), and
determine a barometric pressure value based on data obtained from the one or more barometric pressure sensors (520) and the identified information regarding the relative movement.

2. The electronic device of claim 1,
wherein the memory (130) stores offset information including offset values related to the relative movement that occurs between the first housing part (210, 1610) and the second housing part (220, 1620), and
wherein the instructions that, when executed by the at least one processor (120) individually or collectively, cause the electronic device to:
adjust the barometric pressure value determined based on the data obtained from the one or more barometric pressure sensors (520) using at least one of the offset values being related to the identified relative movement.

3. The electronic device of any one of claims 1 to 2,
wherein the instructions that, when executed by the at least one processor (120) individually or collectively, cause the electronic device to:
adjust the obtained data using at least one of the offset values being related to the identified relative movement, and
determine the barometric pressure value based on the adjusted data.

4. The electronic device of any one of claims 1 to 3,
wherein the instructions that, when executed by the at least one processor (120) individually or collectively, cause the electronic device to:
determine whether to adjust at least one of the offset values based on the data obtained from the one or more barometric pressure sensors (520).

5. The electronic device of claim 4,
wherein the instructions that, when executed by the at least one processor (120) individually or collectively, cause the electronic device to:
in response to determining to adjust the at least one of the offset values, obtain other data from the one or more barometric pressure sensors (520) during the relative movement,
based on the other data, adjust the at least one of the offset values corresponding to the other data.

6. The electronic device of claim 5, comprising:
at least one motor for moving the second housing part (220, 1620) relative to the first housing part (210, 1610), and
at least one motion sensor,
wherein the instructions that, when executed by the at least one processor (120) individually or collectively, cause the electronic device to:
determine at least one value based on data obtained from the at least one motion sensor, the at least one value being related to movement of the electronic device,
in response to determining to adjust the at least one of the offset values, while the movement of the electronic device is within a reference movement range, using the at least one motor, move the second housing part (220, 1620) relative to the first housing part (210, 1610),
during the relative movement, obtain the other data obtained from the one or more barometric pressure sensors (520).

7. The electronic device of any one of claims 5 or 6, comprising:
at least one communication circuitry,
wherein the instructions that, when executed by the at least one processor (120) individually or collectively, cause the electronic device to:
receive other data from an external electronic device (102, 104) via the at least one communication circuitry, and
based on the other data, adjust the at least one of the offset values corresponding to the other data.

8. The electronic device of any one of the previous claims,
wherein the instructions that, when executed by the at least one processor (120) individually or collectively, cause the electronic device to:
temporarily increase a first barometric pressure value represented by the data obtained from the one or more barometric pressure sensors (520) while the second housing part (220, 1620) moves toward the first housing part (210, 1610), and
temporarily decrease a second barometric pressure value represented by the data obtained from the one or more barometric pressure sensors (520) while the second housing part (220, 1620) moves away from the first housing part (210, 1610).

9. The electronic device of any one of the previous claims,
wherein the instructions that, when executed by the at least one processor (120) individually or collectively, cause the electronic device to:
temporarily increase the first barometric pressure value above the ambient barometric pressure value outside the electronic device, and
temporarily decrease the second barometric pressure value below the ambient barometric pressure value.

10. The electronic device of any one of claims 1 to 5, comprising:
at least one motor for moving the second housing part (220, 1620) relative to the first housing part (210, 1610),
wherein the information regarding the relative movement includes control information for driving the at least one motor to move the second housing part (220, 1620) relative to the first housing part (210, 1610).

11. The electronic device of any one of claims 1 to 4, comprising:
at least one communication circuitry,
wherein the instructions that, when executed by the at least one processor (120) individually or collectively, cause the electronic device to:
receive other data from an external electronic device (102, 104) via the at least one communication circuitry, the other data being related to another barometric pressure value obtained from the external electronic device (102, 104),
in response to the information regarding the relative movement, determine the barometric pressure value based on the data obtained from the one or more barometric pressure sensors (520) and the other data obtained from the external electronic device (102, 104).

12. The electronic device of any one of the previous claims,
wherein the instructions that, when executed by the at least one processor (120) individually or collectively, cause the electronic device to:
display, on the flexible display (230, 1650), a screen (910) containing the barometric pressure value different from an original barometric pressure value indicated by data obtained by the at least one barometric pressure sensor (520) during the relative movement and/or
display, on the flexible display (230, 1650), a screen (910) containing an altitude value based on the barometric pressure value that is different from an original barometric pressure value indicated by data obtained by the at least one barometric pressure sensor (520) during the relative movement.

13. The electronic device of any one the previous claims,
wherein the instructions that, when executed by the at least one processor individually or collectively, cause the electronic device to:
ignore changes in the obtained data or changes in the determined barometric pressure value while the second housing part (220, 1620) is moving relative to the first housing part (210, 1610).

14. The electronic device of any one of the previous claims,
wherein the instructions that, when executed by the at least one processor (120) individually or collectively, cause the electronic device to:
determine the barometric pressure value obtained before the relative movement of the second housing part (220, 1620) with respect to the first housing part (210, 1610) as the barometric pressure value during the relative movement.

15. A non-transitory computer readable storage medium, storing
one or more programs (140),
wherein the one or more programs (140) include, instructions that, when executed by at least one processor (120) including processing circuitry of an electronic device comprising a housing comprising a first housing part (210, 1610) and a second housing part (220, 1620) movably arranged with respect to the first housing part (210, 1610), a flexible display (230, 1650) disposed on the housing, and one or more barometric pressure sensors (520), individually or collectively, cause the electronic device to:
identify information regarding relative movement of the second housing part (220, 1620) with respect to the first housing part (210, 1610), and
determine a barometric pressure value based on data obtained from the one or more barometric pressure sensors (520) and the identified information regarding the relative movement.
